# EUROPEAN PATENT APPLICATION

(11) **EP 4 521 097 A1**
(43) Date of publication of application: **12.03.2025**
(21) Application number: 24198380.8
(22) Date of filing: 04.09.2024
(51) Int. Cl.: G01N 15/1434

(54) **INTEGRATED OPTOFLUIDIC INTERROGATION MODULES, FLOW CYTOMETERS INCLUDING THE SAME, AND METHODS OF USE THEREOF**

(30) Priority: 07.09.2023 US 202363537165 P
(71) Applicant: Becton, Dickinson and Company, Franklin Lakes, New Jersey 07417-1880 (US)
(72) Inventor: Sakai, Christopher, San Jose, 95118 (US); Tsai, Jrhung Taylor, Alameda, 94502 (US)
(74) Representative: Bals & Vogel Patentanwälte PartGmbB

(57) **Abstract**

Integrated optofluidic interrogation modules are provided. Integrated optofluidic interrogation modules of interest include a flow cell comprising a light-accessible flow channel for transporting particles in a flow stream, a linear fiber array integrated with the flow cell and comprising a plurality of non-circular core optical fibers each configured to project excitation wavelength light onto a corresponding focal spot within the flow cell, and a plurality of fiber optic light conveyor couplers for operably attaching a plurality of light sources to the linear fiber array. Also provided are flow cytometers comprising the subject integrated optofluidic interrogation modules, as well as methods of use thereof.

## Description

### CROSS-REFERENCE TO RELATED APPLICATION

Pursuant to 35 U.S.C. § 119 (e), this application claims priority to the filing dates of United States Provisional Patent Application Serial No 63/537,165 filed September 7, 2023, the disclosure of which application is incorporated herein by reference in their entirety.

### INTRODUCTION

Flow cytometry is a technique used to characterize and, in some instances, sort biological material, such as cells of a blood sample or particles of interest in another type of biological or chemical sample. A flow cytometer typically includes a sample reservoir for receiving a fluid sample, such as a blood sample, and a sheath reservoir containing a sheath fluid. The flow cytometer transports the particles (including cells) in the fluid sample as a cell stream to a flow cell, while also directing the sheath fluid to the flow cell. To characterize the components of the flow stream, the flow stream is irradiated with light from a light source. Variations in the materials in the flow stream, such as morphologies or the presence of fluorescent labels, may cause variations in the observed light and these variations allow for characterization and separation.

In conventional flow cytometers, flow cells must be properly aligned with the light source and light collection elements such that light irradiates the flow cell in an intended manner. Assembly of flow cytometers is often a tedious process that requires a highly skilled technician to ensure proper alignment of light sources and light collection elements with the flow cell. Oftentimes, this alignment is accomplished by mounting the light source and/or the flow cell on an x-y-z stage for the three-dimensional positioning of the flow cytometer components. In addition, the positioning of mirrors and other optical components must be finely tuned to properly direct light emitted from the light source to the flow cell. Such separate components require complex mechanical mounting and may therefore suffer from lack of robustness and/or high costs.

### SUMMARY

The present inventors have realized that, because laser beam alignment with a flow core stream is important for signal quality, and that available alignment techniques require well-trained personnel, complex adjustable mechanical or electromechanical components, conventional systems are associated with high installation time, high service time, and high cost. Accordingly, optical modules configured to align laser beams with the core stream in a flow cell are desirable. The integrated optofluidic interrogation modules, flow cytometers, methods and kits described herein satisfy this desire.

Aspects of the invention include an integrated optofluidic interrogation module. Modules of interest include a flow cell comprising a light-accessible flow channel for transporting particles in a flow stream, a linear fiber array integrated with the flow cell and comprising a plurality of non-circular core optical fibers each configured to project excitation wavelength light onto a corresponding focal spot within the flow cell, and a plurality of fiber optic light conveyor couplers for operably attaching a plurality of light sources to the linear fiber array. In some cases, the non-circular core optical fibers are rectangular-core optical fibers, such as square-core optical fibers. In select instances, the non-circular core optical fibers are configured to project excitation wavelength light having a top hat profile onto the focal spots. The non-circular core fibers in the linear fiber array may in some embodiments be vertically stacked. In some such embodiments, the cores of adjacent non-circular core fibers in the linear fiber array are separated from each other by a distance ranging from 0.1 mm to 0.3 mm. In certain cases, the linear fiber array is attached to an outer surface of the flow cell. In certain versions, modules include a focusing optical system integrated with the flow cell and configured to relay the excitation light from the non-circular core optical fibers to the focal spots. The focusing optical system may, in select embodiments, be embedded in the flow cell. In some versions, the focusing optical system comprises a plurality of microlenses. In select instances, modules include a light detector (e.g., forward scatter detector) integrated with the flow cell. In some cases, the modules include an electrical coupler for operably attaching an electrical line to the light detector. In further cases, modules include the electrical line. In select cases, modules include an optical mask positioned between the focal spots and the light detector. In some instances, the light detector is attached to an outer surface of the flow cell. In some embodiments, modules include a plurality of fiber optic light collection element couplers for operably attaching a plurality of fiber optic light collection elements to the flow cell, which may in certain instances be stacked (e.g., vertically stacked). Modules according to some embodiments also include a sample fluid input coupler for injecting a sample fluid into the flow cell. In some cases, modules include a sheath fluid input coupler for injecting sheath fluid into the flow cell, and/or a fluidic output coupler for receiving the flow stream from the flow cell. The flow cell may include, e.g., a cuvette. In certain versions, modules of the invention include a collimating lens (e.g., a Fresnel lens) attached to an outer surface of the cuvette. In some implementations, the collimating lens is an injection compression molded micro lens. In some cases, the integrated optofluidic interrogation module comprises N non-circular core optical fibers, N focal spots, and N fiber optic light conveyor couplers, where N is an integer ranging from 2 to 10. In select versions, the flow cell has a width ranging from 75 mm to 125 mm.

Aspects of the invention also include flow cytometers. The subject flow cytometers include a plurality of light sources and an integrated optofluidic interrogation module of the invention (e.g., described above). Aspects of the invention additionally include methods of analyzing a sample. Methods of interest include introducing a particulate sample into a flow cytometer of the invention, and flow cytometrically analyzing the particulate sample. Kits including the integrated optofluidic interrogation module as well as components associated therewith are also provided.

Aspects of the invention further include methods of assembling a flow cytometer. Methods of interest involve positioning an integrated optofluidic interrogation module of the invention into a flow cytometer, and operably attaching a plurality of light sources to the fiber optic light conveyor couplers to assemble the flow cytometer. In some cases, methods also include operably attaching an electrical line to an electrical coupler of the module. In embodiments, methods include operably attaching a plurality of fiber optic light collection elements to a plurality of fiber optic light collection element couplers of the module. In certain instances, methods include fluidically connecting a sample fluid line of the flow cytometer to a sample fluid input coupler of the module. In certain versions, methods include fluidically connecting a sheath fluid line of the flow cytometer to a sheath fluid input coupler of the module. In some cases, methods include fluidically connecting a waste line of the flow cytometer to a fluidic output coupler of the module.

### BRIEF DESCRIPTION OF THE FIGURES

The invention may be best understood from the following detailed description when read in conjunction with the accompanying drawings. Included in the drawings are the following figures:
**FIGs. 1A-1C** depict an integrated optofluidic interrogation module according to certain embodiments of the invention.
**FIG. 2** depicts a schematic diagram of a flow cytometer comprising an integrated optofluidic interrogation module according to certain embodiments of the invention.
**FIG. 3** depicts a control system according to certain embodiments.
**FIGs. 4A-4B** present a schematic drawing of a particle sorter system according to certain embodiments.
**FIG. 5** depicts a block diagram of a computing system according to certain embodiments.
**FIG. 6** depicts an irradiance profile obtained from a linear fiber array of the invention.

### DETAILED DESCRIPTION

Integrated optofluidic interrogation modules are provided. Integrated optofluidic interrogation modules of interest include a flow cell comprising a light-accessible flow channel for transporting particles in a flow stream, a linear fiber array integrated with the flow cell and comprising a plurality of non-circular core optical fibers each configured to project excitation wavelength light onto a corresponding focal spot within the flow cell, and a plurality of fiber optic light conveyor couplers for operably attaching a plurality of light sources to the linear fiber array. Also provided are flow cytometers comprising the subject integrated optofluidic interrogation modules, as well as methods of use thereof.

Before the present invention is described in greater detail, it is to be understood that this invention is not limited to particular embodiments described, as such may, of course, vary. It is also to be understood that the terminology used herein is for the purpose of describing particular embodiments only, and is not intended to be limiting, since the scope of the present invention will be limited only by the appended claims.

Where a range of values is provided, it is understood that each intervening value, to the tenth of the unit of the lower limit unless the context clearly dictates otherwise, between the upper and lower limit of that range and any other stated or intervening value in that stated range, is encompassed within the invention. The upper and lower limits of these smaller ranges may independently be included in the smaller ranges and are also encompassed within the invention, subject to any specifically excluded limit in the stated range. Where the stated range includes one or both of the limits, ranges excluding either or both of those included limits are also included in the invention.

Certain ranges are presented herein with numerical values being preceded by the term "about." The term "about" is used herein to provide literal support for the exact number that it precedes, as well as a number that is near to or approximately the number that the term precedes. In determining whether a number is near to or approximately a specifically recited number, the near or approximating unrecited number may be a number which, in the context in which it is presented, provides the substantial equivalent of the specifically recited number.

Unless defined otherwise, all technical and scientific terms used herein have the same meaning as commonly understood by one of ordinary skill in the art to which this invention belongs. Although any methods and materials similar or equivalent to those described herein can also be used in the practice or testing of the present invention, representative illustrative methods and materials are now described.

All publications and patents cited in this specification are herein incorporated by reference as if each individual publication or patent were specifically and individually indicated to be incorporated by reference and are incorporated herein by reference to disclose and describe the methods and/or materials in connection with which the publications are cited. The citation of any publication is for its disclosure prior to the filing date and should not be construed as an admission that the present invention is not entitled to antedate such publication by virtue of prior invention. Further, the dates of publication provided may be different from the actual publication dates which may need to be independently confirmed.

It is noted that, as used herein and in the appended claims, the singular forms "a", "an", and "the" include plural referents unless the context clearly dictates otherwise. It is further noted that the claims may be drafted to exclude any optional element. As such, this statement is intended to serve as antecedent basis for use of such exclusive terminology as "solely," "only" and the like in connection with the recitation of claim elements, or use of a "negative" limitation.

As will be apparent to those of skill in the art upon reading this disclosure, each of the individual embodiments described and illustrated herein has discrete components and features which may be readily separated from or combined with the features of any of the other several embodiments without departing from the scope or spirit of the present invention. Any recited method can be carried out in the order of events recited or in any other order which is logically possible.

While the system and method has or will be described for the sake of grammatical fluidity with functional explanations, it is to be expressly understood that the claims, unless expressly formulated under 35 U.S.C. §112, are not to be construed as necessarily limited in any way by the construction of "means" or "steps" limitations, but are to be accorded the full scope of the meaning and equivalents of the definition provided by the claims under the judicial doctrine of equivalents, and in the case where the claims are expressly formulated under 35 U.S.C. §112 are to be accorded full statutory equivalents under 35 U.S.C. §112.

### INTEGRATED OPTOFLUIDIC INTERROGATION MODULES

As discussed above, aspects of the invention include integrated optofluidic interrogation modules. Modules of interest include a flow cell comprising a light-accessible flow channel for transporting particles in a flow stream, a linear fiber array integrated with the flow cell and comprising a plurality of non-circular core optical fibers each configured to project excitation wavelength light onto a corresponding focal spot within the flow cell, and a plurality of fiber optic light conveyor couplers for operably attaching a plurality of light sources to the linear fiber array. By "integrated" optofluidic interrogation module, it is meant that at least the flow cell, linear fiber array and in some fiber optic light conveyor couplers, rather than existing as separate and distinct elements, are incorporated with one another such that they form a cohesive whole. The flow cell and the linear fiber array may be integrated such that they are attached at a fixed location, where the fixed location is chosen to provide optical alignment with the core stream of the flow cell and collection optics associated therewith. Accordingly, in some instances, components of the integrated optofluidic interrogation modules (e.g., flow cell, linear fiber array, etc.) exist in a fixed position relative to one another, e.g., so that they maintain proper optical alignment over time. In some cases, components of the integrated optofluidic interrogation modules (e.g., flow cell, linear fiber array, etc.) cannot be easily separated into component parts without damage to one or more of the parts. In some cases, therefore, integrated optofluidic interrogation modules are non-adjustable, e.g., because the components already exist in a state of optimal alignment. In certain cases, the subject integrated optofluidic interrogation modules reduce the need for manual adjustment to achieve optical alignment, e.g., because each component exists in a fixed position relative to one another and thereby remains in proper optical alignment. In some instances, the integrated optics of the integrated light interrogation module described herein may enhance efficiency with respect to the collection of fluorescent light emitted by particles in the flow cell, e.g., by increasing the amount of fluorescent light collected relative to noise.

As discussed herein, a "flow cell" is described in its conventional sense to refer to a component, such as a cuvette, containing a flow channel for a liquid flow stream for transporting particles in a sheath fluid. Cuvettes of interest include containers having a passage running therethrough. The flow stream for which the flow channel is configured may include a liquid sample injected from a sample tube. In certain instances, the flow cell includes a light-accessible flow channel. In such instances, the flow cell includes transparent material (e.g., quartz) that permits the passage of light therethrough. In some cases, the flow cell is configured for irradiation with light from a light source at one or more interrogation points. The "interrogation point" discussed herein refers to a region within the flow cell in which the particle is irradiated by light from the light source, e.g., for analysis. The size of the interrogation point may vary as desired. For example, where 0 µm represents the optical axis of light emitted by the light source, the interrogation point may range from -50 µm to 50 µm, such as -25 µm to 40 µm, and including -15 µm to 30 µm.

During use of the integrated optofluidic interrogation modules of the invention, particles may be transported through a core stream of the flow stream. The "core stream" discussed herein is referred to in its conventional sense to describe a portion of a sheath fluid stream (i.e., flow stream) in which particles are transported through the flow cell. In general, particles are transported through the core stream in a single-file manner. The size (e.g., diameter) of the core stream may vary as desired. In some instances, the core stream may possess a diameter that is approximately the same as the diameter of the particles being analyzed. As such, in some cases, the diameter of the core stream ranges from 5 µm to 25 µm, including 10 µm to 20 µm. Core stream diameter may be adjusted in proportion to the pressure applied to the particles as they are injected into the sheath fluid stream. The flow rate of the sheath fluid remains constant. In this manner, particles are injected into the sheath fluid and hydrodynamically focused such that laminar flow is generated and the particles travel along the same axis at approximately the same rate. Because particles in the core stream travel along the same axis, the geometry of the core stream is defined by straight edges.

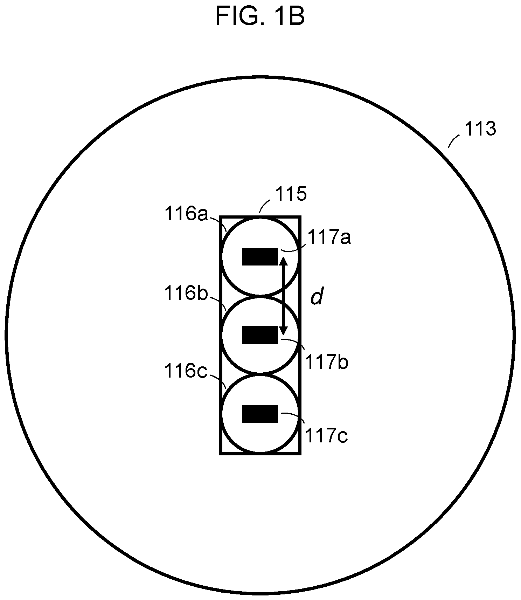

The linear fiber array of the integrated optofluidic interrogation modules includes a plurality of non-circular core optical fibers. The linear fiber arrays described herein are fiber arrays formed at the end of a bundle of fibers that arrange constituent fibers linearly. The optical fibers may be comprised of a cladding and a core. The core is the part of the optical fiber comprised of a transparent material configured to convey light, while the cladding causes the light to be primarily confined to the core. In other words, the core has a high refractive index relative to the cladding. The cladding and core may be comprised of the same or of different materials. In certain cases, the cladding and core are comprised of a silica-based glass (e.g., SiO₂). In other embodiments, the transparent material includes a polymeric material. In such embodiments, the transparent material may include one or more materials such as, but not limited to, poly(methyl-methacrylate) (PMMA), polystyrene, and poly(perfluoro-butenyl vinyl ether) (CYTOP). In certain cases, the cores of the optical fibers have opposing edges running parallel to the direction of the core stream i.e., edges running parallel to one another and existing on opposite sides of the collection core of the fiber. In other words, the projection surface of the core of the fiber (i.e., the area of the core through which light is emitted, see **FIG. 1B****)** is defined by straight edges. By "running parallel" to the core stream, it is meant that the opposing straight edges of the projection surface of cores of the optical fibers are arranged such that they run in a parallel direction with respect to the axis along which particles are transported within the core stream. The opposing parallel edges may have any suitable length. In some cases, lengths range from 5 µm to 100 µm, such as 10 µm to 75 µm, such as 15 µm to 50 µm, and including 15 µm to 25 µm.

In addition to possessing opposing edges running parallel to the direction of the core stream, optical fiber cores of the linear fiber array may have projection surfaces having opposing edges that run perpendicular to the direction of the core stream. By "running perpendicular" to the core stream, it is meant that opposing straight edges of the collection surface of the fiber optic light collector run in a perpendicular direction with respect to the axis along which particles are transported within the core stream. The opposing perpendicular edges may have any suitable length. In some cases, lengths range from 5 µm to 150 µm, such as 50 µm to 100 µm, such as 60 µm to 90 µm, and including 70 µm to 80 µm. The cores may have multiple suitable non-circular shapes. For example, in some cases, the non-circular core optical fibers are rectangular-core optical fibers. In some such cases, the non-circular core optical fibers are square-core optical fibers.

In certain instances, the non-circular core optical fibers are configured to project excitation wavelength light having a top hat profile onto the focal spots. Put another way, in addition to guiding the light without complex alignment procedures, the non-circular core optical fibers also shape the beam such that it launches from the fiber with a flat top beam profile. The term "top hat" (sometimes also referred to as "flat top") is used herein in its conventional sense to refer to a beam of irradiation (e.g., light) having near uniform fluence (energy density) along one or more axes orthogonal to the optical axis of the beam of irradiation. In embodiments, output beams of light having a top hat intensity profile exhibit little to no deviation in relative intensity from each edge to the center along the horizontal axis, where beams of light having a top hat intensity profile of interest have an intensity at the center that is from 95% to 99.9% of the intensity at the edges along the horizontal axis, such as 96% to 99.5% and including from 98% to 99% of the intensity at the edges along the horizontal axis. Non-circular core fibers, such as those described herein, can create flat top profiles by assuming the function of a mode scrambler. In other words, a rectangular core geometry can stimulate coupled optical modes and thereby provide a homogenized intensity distribution. This property of non-circular core fibers is described in, e.g., Hracek, B., & Bäuerle, H. (2015). Optik & Photonik, 10(5), 16-18.

Each non-circular core optical fiber is configured to project excitation wavelength light onto a corresponding focal spot within the flow cell. By "focal spot", it is meant a particular region of the interrogation zone of the flow cell that that is irradiated by one or more lasers. Put another way, modules are configured to focus excitation wavelength light onto particular portions of the flow cell while preventing that light from irradiating the flow cell at another, undesirable, location. The distance separating adjacent focal spots depends at least in part on a distance separating cores of adjacent optical fibers in the linear fiber array. In some embodiments, the non-circular core optical fibers are assembled into a linear array construction such that the fiber core size and spacing correspond to the desired dimension to be launched into the flow cell for excitation of particles in the core stream of the flow cell. The non-circular core optical fibers may have any suitable arrangement. In some cases, the non-circular core fibers in the linear fiber array are vertically stacked. Distances between adjacent non-circular core fibers may vary, as desired. In some cases, fibers are in a vertically stacked arrangement separated only by their cladding thickness. In other cases, such as where it is desirable to have focal spots that are separated by a greater distance, claddings of adjacent optical fibers in the linear fiber array are separated from each other by a distance ranging from 0.01 mm to 1 mm, such as 0.01 mm to 0.5 mm, such as 0.01 mm to 0.25 mm, such as 0.01 mm to 0.1 mm µm such as 0.01 mm to 0.05 mm and including 0.01 mm to 0.025 mm. The distances separating cores of adjacent non-circular core fibers in the linear fiber array may also vary. In some cases, the cores of adjacent non-circular core fibers in the linear fiber array are separated from each other by a distance (e.g., measured from the geometric center of the light projection surface of one core to the light projection surface of an adjacent core) ranging from 0.01 mm to 1 mm, such as 0.05 mm to 0.5 mm, such as 0.1 mm to 0.25 mm, and including 0.1 mm to 0.15 mm. In some cases, the cores of adjacent non-circular core fibers in the linear fiber array are separated from each other by a distance of 0.125 mm.

A particular arrangement of optical fibers within the linear fiber array may be achieved in any convenient manner. In some cases, the linear fiber array comprises optical fibers placed in V-shaped grooves in a surface that are sized and shaped to maintain a certain distance or lack thereof between the optical fibers. In other cases, the linear fiber array may position each fiber using holes in a surface. When the fibers are placed through the proper holes, proper alignment of the fibers to the core stream is achieved. In some cases, the surface is a glass surface. In other cases, the surface is a polymeric (e.g., plastic) surface. In still other cases, the surface is a metal surface.

The linear fiber array may be integrated with the flow cell in any convenient manner. In some cases, the linear fiber array is attached to an outer surface of the flow cell. For example, in some embodiments, the linear fiber array is attached via an adhesive. Any convenient optical adhesive may be employed. For example, adhesives of interest may include epoxies, light curable acrylics, elastomers (e.g., silicone, silicone-free silane), cyanoacrylates, and structural adhesives (e.g., those having a resin and activator). In some embodiments, the adhesive is curable by exposure to light (e.g., UV light). In certain embodiments, the optical adhesive is clear. In other cases, components of the linear fiber array are embedded in the wall of the flow cell. In such cases, the focusing optical assembly may be incorporated into the structure of the flow cell rather than attached to the surface thereof. In certain cases, the linear fiber array in integrated with the flow cell via a technique such as press fit (i.e., interference fit). Press fit is a known technique whereby a hole that is slightly smaller than the shape of the focusing optical assembly component (e.g., lens) is generated in the housing. The focusing optical assembly component and housing may subsequently held together by friction after the two elements are forced together.

As discussed above, integrated optofluidic interrogation modules of the invention include a plurality of fiber optic light conveyor couplers for operably attaching a plurality of light sources to the linear fiber array. While the light-emitting ends of the optical fibers are co-located in the linear fiber array, the light-receiving ends of the optical fibers are spatially separated and include fiber optic light conveyor couplers. These couplers may employ any suitable coupling mechanism configured to operably attach the light sources to the linear fiber array. Couplings of interest include but are not limited to screw couplings, latch couplings, push-pull couplings, bayonet couplings, gendered couplings, snap-fit couplings, combinations thereof, and the like.

In some cases, integrated optofluidic interrogation modules additionally include a plurality of fiber optic light conveyors, e.g., operably attached to the fiber optic light conveyor couplers associated with the linear fiber array. As described herein, a "fiber optic light conveyor" refers to an elongated structure having a proximal and distal end, where the elongated structure is fabricated from a light transparent material that is configured for transmitting light from a light source at the proximal end to the focusing optical assembly at the distal end. In some embodiments, the transparent material includes a glass material such as, but not limited to, silica (e.g., fused silica). In other embodiments, the transparent material includes a polymeric material. In such embodiments, the transparent material may include one or more materials such as, but not limited to, poly(methyl-methacrylate) (PMMA), polystyrene, and poly(perfluoro-butenyl vinyl ether) (CYTOP). In some embodiments, the fiber optic light collector is a single-mode fiber. As is understood in the art, a single-mode fiber is an optical fiber that conveys light having one mode at a given time. In other instances, the fiber optic light collector is a multi-mode fiber. In contrast to a single-mode fiber, a multi-mode fiber propagates light having multiple modes at the same time. The diameter of the fiber optic light conveyor may vary as desired. In some embodiments, the diameter of the subject fiber optic light conveyor ranges from 0.1 mm to 3 mm, such as 0.2 mm to 2.5 mm, 0.3 mm to 2.2 mm, 0.4 mm to 2 mm. 0.5 mm to 1.5 mm, and including 0.6 mm to 1.2 mm. Where included, the fiber optic light conveyor connectors may themselves connect to a laser in some embodiments.

In some cases, integrated optofluidic interrogation modules of the invention also include a focusing optical system integrated with the flow cell and configured to relay the excitation light from the non-circular core optical fibers to the focal spots. Focusing optical systems may include, for example, one or more lenses. In such cases, the focusing optical system may include any convenient number of lenses, such as 1 to 10 lenses, 2 to 5 lenses, and including 2 to 4 lenses. In certain embodiments, one or more lenses in the focusing optical assembly are microlenses. In such embodiments, the subject microlenses may be of any convenient size and shape. In some instances, focusing optical assembly includes microlenses having a diameter ranging from 10 µm to 5 mm, such as 50 µm to 2 mm and including 100 µm to 1 mm. In some cases, the subject microlenses are spherically shaped. In embodiments, the microlenses possess a plane surface on one side and a spherical (e.g., convex) surface on the other. In additional embodiments, the microlenses are aspheric lenses, i.e., lenses possessing dimensions that are not spherical or cylindrical. In embodiments of the focusing optical system including multiple microlenses, each microlens in the focusing optical system may be the same or different. For example, the microlenses may possess different sizes and/or shapes as desired for focusing excitation wavelength light onto a focal spot of the flow cell. In some embodiments, the lenses are arranged in an array. Lenses of interest in the focusing optical system may be formed from any suitable material, including but not limited to, glass (e.g., N-SF10, N-SF11, N-SF57, N-BK7, N-LAK21 or N-LAF35 glass), silica (e.g., fused silica), quartz, crystal (e.g., CaF₂ crystal), zinc selenide (ZnSe), F₂, germanium (Ge) titanate (e.g., S-TIH11), borosilicate (e.g., BK7) or combinations thereof. The refractive index of lenses of interest may vary, ranging from 1 to 3, such as from 1.1 to 2.9, such as from 1.2 to 2.8, such as from 1.3 to 2.7, such as from 1.4 to 2.6, such as from 1.5 to 2.7, such as from 1.6 to 2.6, such as from 1.7 to 2.5, such as from 1.8 to 2.4 and including from 1.9 to 2.3.

In some embodiments, components (e.g., lenses) of the focusing optical system may modify the beam profile of a light beam across one or more of the horizontal axis and the vertical axis. As described herein, the horizontal and vertical axis refer to the axes that are orthogonal to the optical axis (i.e., beam path) of the beam of light and in embodiments, form the X-Y plane of the beam profile. The horizontal axis of output beams of light is orthogonal to the longitudinal axis of the flow stream (e.g., a flow stream in a flow cytometer) and the vertical axis of output beams of light is parallel to the longitudinal axis of the flow stream. In some embodiments, the focusing optical system of interest modifies the beam profile of a propagated light beam across the horizontal axis. In other embodiments, lenses of interest modify the beam profile of a propagated light beam across the vertical axis. In yet other embodiments, lenses of interest modify the beam profile of a propagated light beam across the horizontal axis and the vertical axis. The focusing optical system in these embodiments may include diffractive optics or refractive optics. In some embodiments, the focusing optical system includes a biconic lens. In other embodiments, the focusing optical system includes an achromatic lenses.

The focusing optical system may be integrated with the flow cell through any one of variety of different means, as desired. For example, the focusing optical system may be stably associated with an outer surface of the flow cell. In some embodiments, the focusing optical system may be attached via an adhesive, such as those described above. In some embodiments, components of the focusing optical system (e.g., one or more lenses) may be incorporated (i.e., embedded) into the structure of the flow cell. In some cases, components of the focusing optical system are embedded in the wall of the flow cell. In such cases, the focusing optical system may be incorporated into the structure of the flow cell rather than attached to the surface thereof. In certain cases, lenses of the optical assembly may be incorporated into the structure of the housing via a press fit (i.e., interference fit). In additional embodiments, the focusing optical system is attached to an outer surface of the flow cell via optical contact bonding. As is known in the art, optical contact bonding involves joining two surfaces by exploiting intermolecular forces present between the surfaces. Intermolecular forces relevant in optical contact bonding include Van der Waals forces, hydrogen bonds and dipole-dipole interactions. In embodiments of the invention involving optical contact bonding, surfaces of the focusing optical system and the flow cell may be practically conformal (i.e., flat and smooth) so that intermolecular forces may draw the elements together.

In some embodiments, integrated optofluidic interrogation modules of the invention include one or more light detectors integrated with the flow cell. The number of light detectors integrated with the flow cell may vary, as desired. In some cases, the integrated optofluidic interrogation modules include a single light detector integrated with the flow cell. In other cases, integrated optofluidic interrogation modules include a plurality of light detectors integrated with the flow cell, such as 2 or more light detectors, such as 3 or more light detectors, such as 4 or more light detectors, such as 5 or more light detectors, such as 6 or more light detectors, such as 7 or more light detectors, such as 8 or more light detectors, such as 9 or more light detectors, and including 10 or more light detectors. The light detector(s) may be integrated with the flow cell via any suitable technique, such as those described above (e.g., adhesives, press fit, etc.). In select cases, the light detector is attached to an outer surface of the flow cell.

The light detector may be any convenient particle-modulated light detector. By "particle-modulated light" it is meant light that is received from the particles in the flow stream following the irradiation of the particles with light from the light source. In some cases, the particle-modulated light is side-scattered light. As discussed herein, side-scattered light refers to light refracted and reflected from the surfaces and internal structures of the particle. In additional embodiments, the particle-modulated light includes forward-scattered light (i.e., light that travels through or around the particle in mostly a forward direction). In still other cases, the particle-modulated light includes fluorescent light (i.e., light emitted from a fluorochrome following irradiation with excitation wavelength light).

In some embodiments, the particle-modulated light detector(s) include one or more forward-scattered light detectors configured to detect forward-scattered light. For example, the subject modules may include 1 forward-scattered light detector or multiple forward-scattered light detectors, such as 2 or more, such as 3 or more, such as 4 or more, and including 5 or more. In certain embodiments, modules include 1 forward-scattered light detector. In other embodiments, modules include 2 forward-scattered light detectors.

Any convenient detector for detecting collected light may be used in the forward-scattered light detector described herein. Detectors of interest may include, but are not limited to, optical sensors or detectors, such as active-pixel sensors (APSs), avalanche photodiodes, image sensors, charge-coupled devices (CCDs), intensified charge-coupled devices (ICCDs), light emitting diodes, photon counters, bolometers, pyroelectric detectors, photoresistors, photovoltaic cells, photodiodes, photomultiplier tubes (PMTs), phototransistors, quantum dot photoconductors or photodiodes and combinations thereof, among other detectors. In certain embodiments, the collected light is measured with a charge-coupled device (CCD), semiconductor charge-coupled devices (CCD), active pixel sensors (APS), complementary metal-oxide semiconductor (CMOS) image sensors or N-type metal-oxide semiconductor (NMOS) image sensors. In certain embodiments, the detector is a photomultiplier tube, such as a photomultiplier tube having an active detecting surface area of each region that ranges from 0.01 cm² to 10 cm², such as from 0.05 cm² to 9 cm², such as from 0.1 cm² to 8 cm², such as from 0.5 cm² to 7 cm² and including from 1 cm² to 5 cm².

In embodiments, the forward-scattered light detector is configured to measure light continuously or in discrete intervals. In some instances, detectors of interest are configured to take measurements of the collected light continuously. In other instances, detectors of interest are configured to take measurements in discrete intervals, such as measuring light every 0.001 millisecond, every 0.01 millisecond, every 0.1 millisecond, every 1 millisecond, every 10 milliseconds, every 100 milliseconds and including every 1000 milliseconds, or some other interval.

In some embodiments, modules include one or more wavelength separators positioned between the flow cell and the particle-modulated light detector(s). The term "wavelength separator" is used herein in its conventional sense to refer to an optical component that is configured to separate light collected from the sample into predetermined spectral ranges. In some embodiments, modules include a single wavelength separator. In other embodiments, modules include a plurality of wavelength separators, such as 2 or more wavelength separators, such as 3 or more, such as 4 or more, such as 5 or more, such as 6 or more, such as 7 or more, such as 8 or more, such as 9 or more, such as 10 or more, such as 15 or more, such as 25 or more, such as 50 or more, such as 75 or more and including 100 or more wavelength separators. In some embodiments, the wavelength separator is configured to separate light collected from the sample into predetermined spectral ranges by passing light having a predetermined spectral range and reflecting one or more remaining spectral ranges of light. In other embodiments, the wavelength separator is configured to separate light collected from the sample into predetermined spectral ranges by passing light having a predetermined spectral range and absorbing one or more remaining spectral ranges of light. In yet other embodiments, the wavelength separator is configured to spatially diffract light collected from the sample into predetermined spectral ranges. Each wavelength separator may be any convenient light separation protocol, such as one or more dichroic mirrors, bandpass filters, diffraction gratings, beam splitters or prisms. In some embodiments, the wavelength separator is a prism. In other embodiments, the wavelength separator is a diffraction grating. In certain embodiments, wavelength separators in the subject light detection systems are dichroic mirrors.

In some cases, the light detector(s) incorporated with the flow cell include an electrical coupler for operably attaching an electrical line to the light detector(s). Any element configured to couple a light detector (such as those described above) to an electrical line for conveying signals produced by the light detector may be employed, such as thread, bayonet, braces, blind mate connections, etc. In some cases, modules additionally include the electrical line. The electrical line may be comprised of any suitable insulated conductive material, (e.g., copper).

In some instances, integrated optofluidic interrogation modules include one or more optical adjustment elements configured to modulate light received by the light detector(s). For example, in some instances, modules include an optical filter positioned between the focal spots and the light detector. The optical filter is configured to restrict, reduce or limit the propagation of at least one or more wavelengths of the light (e.g., one or more of the wavelengths of the light of the lasers used to irradiate the sample) from the sample to the active surface of the light detector. The optical filter may limit the propagation of one or more different wavelengths of light, such as 5 or more, such as 10 or more, such as 25 or more, such as 50 or more, such as 100 or more, such as 200 or more, such as 300 or more and including limiting the propagation of 500 or more different wavelengths of light. For example, in some embodiments, the optical filter is a bandpass filter. In other embodiments, the optical filter is a dichroic mirror. In addition or alternatively, modules of the invention may include an optical mask positioned between the focal spots and the light detector. In some cases, the optical mask is configured to block certain portions of light from being detected (e.g., the incident beam from the laser).

In addition to or instead of the light detectors integrated with the flow cell, integrated optofluidic interrogation modules may include one or more fiber optic light collection element couplers for operably attaching one or more fiber optic light collection elements to the flow cell. In such embodiments, the fiber optic light collection element is configured to collect particle-modulated light emitted by the particles transported through the focal spot(s) after those particles have been irradiated with excitation wavelength light. The fiber optic light collection element coupler may operably attach the fiber optic light collection element(s) to the flow cell via any convenient mechanism. In some embodiments, the fiber optic light collection element coupler may operably attach a fiber optic light collection element to the flow cell such that the fiber optic light collection element requires little, if any, optical adjustment to ensure proper optical alignment with the flow cell. In some embodiments, the fiber optic light collection element coupler may physically couple the fiber optic light collection element to the flow cell, such as with an adhesive. In other embodiments, the fiber optic light collection element coupler is configured to releasably attach the fiber optic light collection element. Suitable coupling mechanisms include, e.g., screw, latch, push-pull, bayonet, snap, gendered, and the like.

The number of fiber optic light collection element couplers may vary. In some cases, integrated optofluidic interrogation modules include a single fiber optic light collection element coupler. In other cases, modules include a plurality of fiber optic light collection element couplers, such as 2 or more couplers, such as 3 or more couplers, such as 4 or more couplers, such as 5 or more couplers, such as 6 or more couplers, such as 7 or more couplers, such as 8 or more couplers, such as 9 or more couplers, and including 10 or more couplers. Where modules include plurality of fiber optic light collection element couplers, the couplers in the plurality may be arranged in any suitable manner relative to each other. In some embodiments, the fiber optic light collection element couplers are vertically stacked. In such embodiments, each fiber optic light collection element may be configured to collect light from a particular focal spot.

In embodiments of the method including both a fiber array and fiber optic light collection element coupler(s), the linear fiber array and fiber optic light collection element coupler(s) may assume any convenient position relative to one another with respect to the flow cell. In some embodiments, the fiber optic light collection element coupler is attached to the flow cell on the opposite side of the module with respect to the fiber linear fiber array. In other embodiments, the fiber optic light collection element coupler is attached to the flow cell at a position that is orthogonal or approximately orthogonal with respect to the linear fiber array. The fiber optic light collection element coupler(s) may be positioned within the module such that a fiber optic light collection element connected thereto is in a suitable location to collect one or more types of particle-modulated light (e.g., forward scatter, side scatter, fluorescent, or a combination thereof).

In some embodiments, modules additionally include one or more fiber optic light collection elements operably attached to the plurality of fiber optic light collection elements. In certain embodiments, the fiber optic light collection element is configured to collect fluorescent light emitted by the particles transported through the focal spot after those particles have been irradiated with excitation wavelength light. In some embodiments, the fiber optic light collection element includes a transparent material such as a glass material including, but not limited to, silica (e.g., fused silica). In other embodiments, the transparent material includes a polymeric material. In such embodiments, the transparent material may include one or more materials such as, but not limited to, poly(methyl-methacrylate) (PMMA), polystyrene, and poly(perfluoro-butenyl vinyl ether) (CYTOP). The diameter of the fiber optic light conveyor may vary as desired. In some embodiments, the diameter of the subject fiber optic light conveyor ranges from 0.1 mm to 3 mm, such as 0.2 mm to 2.5 mm, 0.3 mm to 2.2 mm, 0.4 mm to 2 mm. 0.5 mm to 1.5 mm, and including 0.6 mm to 1.2 mm. In some embodiments, the subject modules include a single fiber optic light collection element. In other embodiments, modules include multiple fiber optic light collection elements. For example, flow cytometers of interest may include a fiber optic light collection element for each focal spot and/or fiber optic light collection element coupler. As such, flow cytometers may include one or more fiber optic light collection elements, such as two or more, three or more, four or more, five or more, and including six or more. In some embodiments, one or more fiber optic light collection elements is optically aligned to the core stream and comprises a collection surface having opposing edges running parallel to the direction of the core stream. Exemplary fiber optic light collection elements are described in U.S. Patent Application Publication No. 2022/0236165, the disclosure of which is incorporated by reference herein in its entirety.

In embodiments, integrated optofluidic interrogation modules include collimating optics positioned between the flow stream and the light detectors and/or fiber optic light collection element couplers. For example, in some cases, modules include a collimating lens. In some embodiments where the flow cell includes a cuvette, the collimating lens is attached to an outer surface of the cuvette. The collimating lens may be attached to the outer surface of the cuvette via any suitable means, such as an optical adhesive. In select cases, the collimating lens is an injection compression molded micro lens. In some instances, the collimating lens is a Fresnel lens.

As discussed above, the number of non-circular core optical fibers, focal spots and fiber optic light conveyor couplers may vary among embodiments of the invention. In some cases, modules of the invention include equal numbers of non-circular core optical fibers, focal spots, and fiber optic light conveyor couplers. In other words, the integrated optofluidic interrogation module comprises N non-circular core optical fibers, N focal spots, and N fiber optic light conveyor couplers, where N is any suitable integer. In some cases N ranges from 2 to 50, such as 2 to 40, such as 2 to 30, such as 2 to 20, such as 2 to 10, such as 2 to 5, and including 2 to 4. For example, *N* may in some cases be 1, 2, 3, 4, 5, 6, 7, 8, 9 or 10. Where these elements are included, modules may also include N fiber optic light collection elements and/or N fiber optic light conveyors.

Any convenient flow cell which propagates a fluidic sample to a sample interrogation region may be employed in the subject modules. In some embodiments, the flow cell is a cylindrical flow cell, a frustoconical flow cell or a flow cell that includes a proximal cylindrical portion defining a longitudinal axis and a distal frustoconical portion which terminates in a flat surface having the orifice that is transverse to the longitudinal axis.

In some cases, modules include a fluidic output coupler for receiving the flow stream from the flow cell. The fluidic output coupler may be any component configured to collect the flow stream and convey it from the flow cell. In some cases, the fluidic output coupler comprises a connector at a distal end configured such that a waste line (e.g., tubing) may be connected thereto. Any suitable connector may be included. Exemplary connectors include, e.g., quick disconnect connectors, threaded connectors, luer connectors, multiport connectors, tri clamp fittings, and puncture and seal sterile fittings. Suitable quick disconnect connectors include, but are not limited to, snap-type (ball-latching) connectors, bayonet connectors, threaded connectors, non-latching connectors, single-shutoff connectors, double-shutoff connectors, non-shutoff connectors, dry break connectors, roller lock connectors, pin lock connectors, ring lock connectors, and cam lock connectors. The waste line may convey the liquid to another location, such as a waste reservoir. In some embodiments where the modules are configured for use in vacuum-driven fluidics, the fluidic output coupler is comprised of an outlet fitting. Outlet fittings of interest have an elongate structure and an opening at a proximal end of the elongate structure for receiving the flow stream from a distal end of the flow cell. In some cases, outlet fittings are configured to reduce the formation of bubbles at the interface between the outlet fitting and the flow cell (e.g., a cuvette of the flow cell). Suitable outlet fittings are described in U.S. Patent Application Publication No. 2023/0046207, the description of which is incorporated by reference herein.

In embodiments, modules additionally include a sample fluid input coupler for injecting the sample fluid into the flow cell. In some cases, for example, the sample fluid input coupler may include an orifice interfacing with an orifice of the flow cell so that sample fluid may be provided thereto. In addition, in some embodiments, the sample fluid input coupler includes a connector configured to fluidically connect the sample fluid input coupler to a fluidic line (e.g., tubing) connected to a source of sample fluid. Any suitable connector may be included. Exemplary connectors include, e.g., quick disconnect connectors, threaded connectors, luer connectors, multiport connectors, tri clamp fittings, and puncture and seal sterile fittings. Suitable quick disconnect connectors include, but are not limited to, snap-type (ball-latching) connectors, bayonet connectors, threaded connectors, non-latching connectors, single-shutoff connectors, double-shutoff connectors, non-shutoff connectors, dry break connectors, roller lock connectors, pin lock connectors, ring lock connectors, and cam lock connectors. In some cases, the sample fluid input coupler is or includes a sample injection needle. In some such cases, the sample injection needle has a passage running therethrough for delivering sample fluid from a sample injection line at a proximal end to the flow cell at a distal end to generate the core stream. In some instances, the sample injection needle is configured and positioned to maintain an intact core stream under flow conditions that vary by a magnitude or more. Sample injection needles that may be adapted for use are described in U.S. Patent Application No. 18/215,402; the disclosure of which is herein incorporated by reference in its entirety.

In embodiments, modules additionally include a sheath fluid input coupler for injecting sheath fluid into the flow cell. For example, the sheath fluid input coupler may include an orifice interfacing with an orifice of the flow cell so that sheath fluid may be provided thereto. In addition, the sheath fluid input coupler includes a connector configured to fluidically connect the sheath fluid input coupler to a fluidic line (e.g., tubing) connected to a source of sheath fluid. Any suitable connector may be included. Exemplary connectors include, e.g., quick disconnect connectors, threaded connectors, luer connectors, multiport connectors, tri clamp fittings, and puncture and seal sterile fittings. Suitable quick disconnect connectors include, but are not limited to, snap-type (ball-latching) connectors, bayonet connectors, threaded connectors, non-latching connectors, single-shutoff connectors, double-shutoff connectors, non-shutoff connectors, dry break connectors, roller lock connectors, pin lock connectors, ring lock connectors, and cam lock connectors.

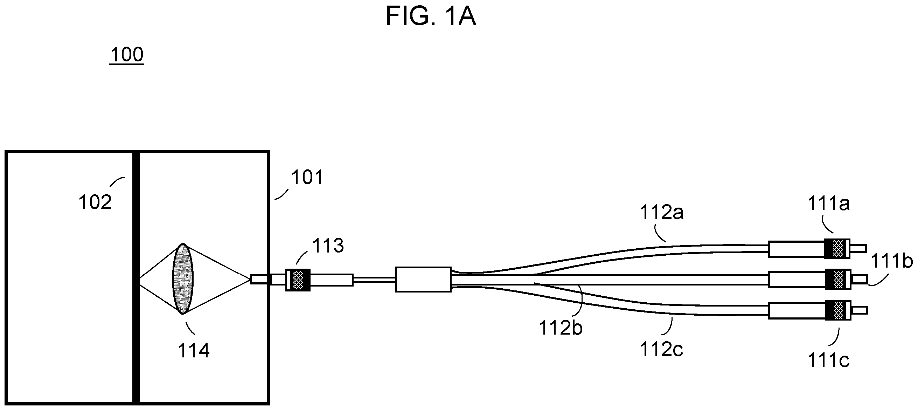

**FIGs. 1A-1C** depict an integrated optofluidic interrogation module according to certain embodiments of the invention. As shown in **FIG. 1A****,** integrated optofluidic interrogation module 100 includes flow cell 101 configured to transport particles in flow stream 102 (i.e., a core stream of flow stream 102). Integrated optofluidic interrogation module 100 has a plurality of fiber optic light conveyor couplers 111a, 111b, and 111c. Each fiber optic light conveyor coupler may be configured to operably attach to fiber optic light conveyors which may themselves be coupled to lasers. In alternative embodiments, fiber optic light conveyor couplers 111a-111c may couple directly to the lasers (i.e., without intermediate fiber optics). Also shown is a linear fiber array 113 integrated with flow cell 101 and comprising a plurality of non-circular core optical fibers each configured to project excitation wavelength light onto a corresponding focal spot within flow stream 102 in flow cell 101. Light is propagated through optical fibers 112a, 112b and 112c to linear fiber array 113 via from fiber optic light conveyor couplers 111a, 111b, and 111c, respectively. In the embodiment of **FIG. 1A****,** module 100 also includes a focusing optical system depicted in the form of lens 114 integrated with the flow cell 101 and configured to relay excitation light from the non-circular core optical fibers to the focal spots. Alternatively, the focusing optical system may include a plurality of microlenses.

**FIG. 1B** presents a view of the light emitting surface of linear fiber array 113. As shown in **FIG. 1B****,** linear fiber array 113 includes a vertical stack 115 of non-circular core optical fibers 116a, 116b and 116c. Non-circular core optical fiber 116a is continuous with optical fiber 112a and fiber optic light conveyor coupler 111a such that laser light received at fiber optic light conveyor coupler 111a is propagated along optical fiber 112a and emitted at non-circular core optical fiber 116a. Non-circular core optical fiber 116b is continuous with optical fiber 112b and fiber optic light conveyor coupler 111b such that laser light received at fiber optic light conveyor coupler 111b is propagated along optical fiber 112b and emitted at non-circular core optical fiber 116b. Non-circular core optical fiber 116c is continuous with optical fiber 112c and fiber optic light conveyor coupler 111c such that laser light received at fiber optic light conveyor coupler 111c is propagated along optical fiber 112c and emitted at non-circular core optical fiber 116c. Non-circular core optical fibers 116a, 116b, and 116c include cores 117a, 117b and 117c, respectively. In the embodiment of **FIG. 1B****,** cores 117a, 117b and 117c are rectangular in shape and are configured to project excitation wavelength light having a top hat profile onto the focal spots. Cores of adjacent non-circular core optical fibers are separated by a distance d, which in this case is determined by the cladding thickness of each of non-circular core optical fibers 116a, 116b, and 116c (i.e., the portion of non-circular core optical fibers 116a, 116b, and 116c surrounding cores 117a, 117b and 117c, respectively). In this arrangement the fiber output is mechanically and optically matched to the desired core stream positions of the respective laser excitation beams.

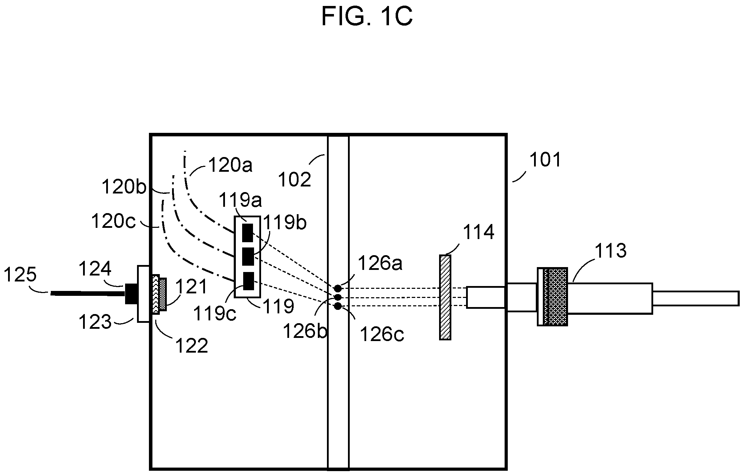

**FIG. 1C** presents an embodiment of flow cell 101. Linear fiber array 113 projects excitation wavelength light as described above with respect to **FIG. 1A** and **FIG.** 1B. This light passes through lens 114. Non-circular core optical fibers 116a projects excitation wavelength light onto focal spot 126a within flow stream 102 of flow cell 101. Non-circular core optical fibers 116b projects excitation wavelength light onto focal spot 126b within flow stream 102 of flow cell 101. Non-circular core optical fibers 116c projects excitation wavelength light onto focal spot 126c within flow stream 102 of flow cell 101. Irradiation of particles in focal spots 126a-126c generates forward scatter light that propagates in a mostly forward direction. Forward scatter detector 123 is integrated with flow cell 101 and is configured to detect this forward scattered light. Also shown are optical mask 121 and optical filter 122 integrated with flow cell 101. Attached to forward scatter detector 123 is electrical coupler 124 for operably attaching electrical line 125 to the detector 123. In addition to forward scattered light, irradiation of particles in focal spots 126a-126c may generate side scattered and/or fluorescent light. A vertical stack 119 of fiber optic light collection element couplers 119a, 119b and 119c is included for operably attaching fiber optic light collection elements 120a, 120b and 120c, respectively, to flow cell 101. Fiber optic light collection elements 120a, 120b and 120c operably attached to fiber optic light collection element couplers 119a, 119b and 119c may be configured to convey fluorescent and/or side scatter light from focal points 126a, 126b and 126c, respectively. This light may be conveyed to one or more light detectors, as appropriate.

### FLOW CYTOMETERS

Aspects of the invention include flow cytometers. Flow cytometers of interest include a plurality of light sources, and an integrated optofluidic interrogation module of the invention (e.g., described above). The number of light sources in the flow cytometers may vary. In some instances, the number of light sources ranges from 2 to 10, such as 2 to 5, and including 2 to 4. Any convenient light source may be employed as the light source described herein. In some embodiments, the light source is a laser. In embodiments, the laser may be any convenient laser, such as a continuous wave laser. For example, the laser may be a diode laser, such as an ultraviolet diode laser, a visible diode laser and a near-infrared diode laser. In other embodiments, the laser may be a helium-neon (HeNe) laser. In some instances, the laser is a gas laser, such as a helium-neon laser, argon laser, krypton laser, xenon laser, nitrogen laser, CO₂ laser, CO laser, argon-fluorine (ArF) excimer laser, krypton-fluorine (KrF) excimer laser, xenon chlorine (XeCI) excimer laser or xenon-fluorine (XeF) excimer laser or a combination thereof. In other instances, the subject flow cytometers include a dye laser, such as a stilbene, coumarin or rhodamine laser. In yet other instances, lasers of interest include a metal-vapor laser, such as a helium-cadmium (HeCd) laser, helium-mercury (HeHg) laser, helium-selenium (HeSe) laser, helium-silver (HeAg) laser, strontium laser, neon-copper (NeCu) laser, copper laser or gold laser and combinations thereof. In still other instances, the subject flow cytometers include a solid-state laser, such as a ruby laser, an Nd:YAG laser, NdCrYAG laser, Er:YAG laser, Nd:YLF laser, Nd:YVO₄ laser, Nd:YCa₄O(BO₃)₃ laser, Nd:YCOB laser, titanium sapphire laser, thulim YAG laser, ytterbium YAG laser, ytterbium₂O₃ laser or cerium doped lasers and combinations thereof.

Laser light sources according to certain embodiments may also include one or more optical adjustment components. In certain embodiments, the optical adjustment component is located between the light source and the flow cell, and may include any device that is capable of changing the spatial width of irradiation or some other characteristic of irradiation from the light source, such as for example, irradiation direction, wavelength, beam width, beam intensity and focal spot. Optical adjustment protocols may include any convenient device which adjusts one or more characteristics of the light source, including but not limited to lenses, mirrors, filters, fiber optics, wavelength separators, pinholes, slits, collimating protocols and combinations thereof. In certain embodiments, flow cytometers of interest include one or more focusing lenses. The focusing lens, in one example, may be a de-magnifying lens. In still other embodiments, flow cytometers of interest include fiber optics.

The light source may be positioned any suitable distance from the flow cell, such as where the light source and the flow cell are separated by 0.005 mm or more, such as 0.01 mm or more, such as 0.05 mm or more, such as 0.1 mm or more, such as 0.5 mm or more, such as 1 mm or more, such as 5 mm or more, such as 10 mm or more, such as 25 mm or more and including at a distance of 100 mm or more. In addition, the light source may be positioned at any suitable angle relative to the flow cell, such as at an angle ranging from 10 degrees to 90 degrees, such as from 15 degrees to 85 degrees, such as from 20 degrees to 80 degrees, such as from 25 degrees to 75 degrees and including from 30 degrees to 60 degrees, for example at a 90 degree angle.

In some embodiments, light sources of interest include a plurality of lasers configured to provide laser light for discrete irradiation of the flow stream, such as 2 lasers or more, such as 3 lasers or more, such as 4 lasers or more, such as 5 lasers or more, such as 10 lasers or more, and including 15 lasers or more configured to provide laser light for discrete irradiation of the flow stream. Depending on the desired wavelengths of light for irradiating the flow stream, each laser may have a specific wavelength that varies from 200 nm to 1500 nm, such as from 250 nm to 1250 nm, such as from 300 nm to 1000 nm, such as from 350 nm to 900 nm and including from 400 nm to 800 nm. In certain embodiments, lasers of interest may include one or more of a 405 nm laser, a 488 nm laser, a 561 nm laser and a 635 nm laser.

Fiber optic light conveyor couplers of the linear fiber array of the integrated optofluidic interrogation module may be configured to interface directly with the lasers such that light output by the lasers travels to an appropriate optical fiber in the linear fiber array. In embodiments, flow cytometers of the invention include fiber optic light collection elements operably attached to the fiber optic light collection element couplers of the integrated optofluidic interrogation module. Details regarding fiber optic light collection elements are provided above in reference to integrated optofluidic interrogation modules of the invention.

Flow cytometers of the invention may include light detectors operably attached to the fiber optic light collection elements. The light detectors are configured to detect particle-modulated light conveyed by the fiber optic light collection elements and generate signals based on a characteristic of that light (e.g., intensity). For example, the one or more particle-modulated light detector(s) may include one or more side-scattered light detectors for detecting side-scatter wavelengths of light (i.e., light refracted and reflected from the surfaces and internal structures of the particle). In some embodiments, modules include a single side-scattered light detector. In other embodiments, modules include multiple side-scattered light detectors, such as 2 or more, such as 3 or more, such as 4 or more, and including 5 or more.

Any convenient detector for detecting collected light may be used in the side-scattered light detector described herein. Detectors of interest may include, but are not limited to, optical sensors or detectors, such as active-pixel sensors (APSs), avalanche photodiodes, image sensors, charge-coupled devices (CCDs), intensified charge-coupled devices (ICCDs), light emitting diodes, photon counters, bolometers, pyroelectric detectors, photoresistors, photovoltaic cells, photodiodes, photomultiplier tubes (PMTs), phototransistors, quantum dot photoconductors or photodiodes and combinations thereof, among other detectors. In certain embodiments, the collected light is measured with a charge-coupled device (CCD), semiconductor charge-coupled devices (CCD), active pixel sensors (APS), complementary metal-oxide semiconductor (CMOS) image sensors or N-type metal-oxide semiconductor (NMOS) image sensors. In certain embodiments, the detector is a photomultiplier tube, such as a photomultiplier tube having an active detecting surface area of each region that ranges from 0.01 cm² to 10 cm², such as from 0.05 cm² to 9 cm², such as from 0.1 cm² to 8 cm², such as from 0.5 cm² to 7 cm² and including from 1 cm² to 5 cm².

In embodiments, the subject modules also include a fluorescent light detector configured to detect one or more fluorescent wavelengths of light. In other embodiments, modules include multiple fluorescent light detectors such as 2 or more, such as 3 or more, such as 4 or more, 5 or more, 10 or more, 15 or more, and including 20 or more.

Any convenient detector for detecting collected light may be used in the fluorescent light detector described herein. Detectors of interest may include, but are not limited to, optical sensors or detectors, such as active-pixel sensors (APSs), avalanche photodiodes, image sensors, charge-coupled devices (CCDs), intensified charge-coupled devices (ICCDs), light emitting diodes, photon counters, bolometers, pyroelectric detectors, photoresistors, photovoltaic cells, photodiodes, photomultiplier tubes (PMTs), phototransistors, quantum dot photoconductors or photodiodes and combinations thereof, among other detectors. In certain embodiments, the collected light is measured with a charge-coupled device (CCD), semiconductor charge-coupled devices (CCD), active pixel sensors (APS), complementary metal-oxide semiconductor (CMOS) image sensors or N-type metal-oxide semiconductor (NMOS) image sensors. In certain embodiments, the detector is a photomultiplier tube, such as a photomultiplier tube having an active detecting surface area of each region that ranges from 0.01 cm² to 10 cm², such as from 0.05 cm² to 9 cm², such as from, such as from 0.1 cm² to 8 cm², such as from 0.5 cm² to 7 cm² and including from 1 cm² to 5 cm².

Where the subject modules include multiple fluorescent light detectors, each fluorescent light detector may be the same, or the collection of fluorescent light detectors may be a combination of different types of detectors. For example, where the subject modules include two fluorescent light detectors, in some embodiments the first fluorescent light detector is a CCD-type device and the second fluorescent light detector (or imaging sensor) is a CMOS-type device. In other embodiments, both the first and second fluorescent light detectors are CCD-type devices. In yet other embodiments, both the first and second fluorescent light detectors are CMOS-type devices. In still other embodiments, the first fluorescent light detector is a CCD-type device and the second fluorescent light detector is a photomultiplier tube (PMT). In still other embodiments, the first fluorescent light detector is a CMOS-type device and the second fluorescent light detector is a photomultiplier tube. In yet other embodiments, both the first and second fluorescent light detectors are photomultiplier tubes.

In embodiments of the present disclosure, fluorescent light detectors of interest are configured to measure collected light at one or more wavelengths, such as at 2 or more wavelengths, such as at 5 or more different wavelengths, such as at 10 or more different wavelengths, such as at 25 or more different wavelengths, such as at 50 or more different wavelengths, such as at 100 or more different wavelengths, such as at 200 or more different wavelengths, such as at 300 or more different wavelengths and including measuring light emitted by a sample in the flow stream at 400 or more different wavelengths. In some embodiments, 2 or more detectors in the modules as described herein are configured to measure the same or overlapping wavelengths of collected light.

In some embodiments, fluorescent light detectors of interest are configured to measure collected light over a range of wavelengths (e.g., 200 nm - 1000 nm). In certain embodiments, detectors of interest are configured to collect spectra of light over a range of wavelengths. For example, modules may include one or more detectors configured to collect spectra of light over one or more of the wavelength ranges of 200 nm - 1000 nm. In yet other embodiments, detectors of interest are configured to measure light emitted by a sample in the flow stream at one or more specific wavelengths. For example, modules may include one or more detectors configured to measure light at one or more of 450 nm, 518 nm, 519 nm, 561 nm, 578 nm, 605 nm, 607 nm, 625 nm, 650 nm, 660 nm, 667 nm, 670 nm, 668 nm, 695 nm, 710 nm, 723 nm, 780 nm, 785 nm, 647 nm, 617 nm and any combinations thereof. In certain embodiments, one or more detectors may be configured to be paired with specific fluorophores, such as those used with the sample in a fluorescence assay.

As discussed above, embodiments of the integrated optofluidic interrogation modules of the invention include a sample fluid input coupler for injecting the flow stream into the flow cell, a sheath fluid input coupler for injecting sheath fluid into the flow cell, and/or a fluidic output coupler for receiving the flow stream from the flow cell. Flow cytometers may include any suitable mechanism(s) for providing sheath fluid and sample fluid to the sample fluid input coupler and sheath fluid input coupler. For example, the sample fluid input coupler may be fluidically connected to a sample fluid line (e.g., tubing) fluidically connected to a sample fluid reservoir. Similarly, the sheath fluid input coupler may be fluidically connected to a sheath fluid line fluidically connected to a sheath fluid reservoir. Similarly, flow cytometers may include any suitable mechanism(s) for managing waste from the flow stream. The fluidic output coupler may be fluidically connected to a waste line fluidically connected to a waste reservoir. Fluid management systems that may be adapted for use in the subject flow cytometers are provided in U.S. Patent Application Publication No. 2022/0341838, the disclosure of which is incorporated by reference herein in its entirety.

Suitable flow cytometry systems may include, but are not limited to those described in Ormerod (ed.), Flow Cytometry: A Practical Approach, Oxford Univ. Press (1997); Jaroszeski et al. (eds.), Flow Cytometry Protocols, Methods in Molecular Biology No. 91, Humana Press (1997); Practical Flow Cytometry, 3rd ed., Wiley-Liss (1995); Virgo, et al. (2012) Ann Clin Biochem. Jan;49(pt 1): 17-28; Linden, et. al., Semin Throm Hemost. 2004 Oct;30(5):502-11; Alison, et al. J Pathol, 2010 Dec; 222(4):335-344; and Herbig, et al. (2007) Crit Rev Ther Drug Carrier Syst. 24(3):203-255; the disclosures of which are incorporated herein by reference. In certain instances, flow cytometry systems of interest include BD Biosciences FACSCanto^{™} flow cytometer, BD Biosciences FACSCanto^{™} II flow cytometer, BD Accuri^{™} flow cytometer, BD Accuri^{™} C6 Plus flow cytometer, BD Biosciences FACSCelesta^{™} flow cytometer, BD Biosciences FACSLyric^{™} flow cytometer, BD Biosciences FACSVerse^{™} flow cytometer, BD Biosciences FACSymphony^{™} flow cytometer, BD Biosciences LSRFortessa^{™} flow cytometer, BD Biosciences LSRFortessa^{™} X-20 flow cytometer, BD Biosciences FACSPresto^{™} flow cytometer, BD Biosciences FACSVia^{™} flow cytometer and BD Biosciences FACSCalibur^{™} cell sorter, a BD Biosciences FACSCount^{™} cell sorter, BD Biosciences FACSLyric^{™} cell sorter, BD Biosciences Via^{™} cell sorter, BD Biosciences InfIux^{™} cell sorter, BD Biosciences Jazz^{™} cell sorter, BD Biosciences Aria^{™} cell sorter, BD Biosciences FACSAria^{™} II cell sorter, BD Biosciences FACSAria^{™} III cell sorter, BD Biosciences FACSAria^{™} Fusion cell sorter and BD Biosciences FACSMelody^{™} cell sorter, BD Biosciences FACSymphony^{™} S6 cell sorter, BD Biosciences FACSDiscover^{™} cell sorter, or the like.

In some embodiments, the subject systems are flow cytometric systems, such those described in U.S. Patent Nos. 10,663,476; 10,620,111; 10,613,017; 10,605,713; 10,585,031; 10,578,542; 10,578,469; 10,481,074; 10,302,545; 10,145,793; 10,113,967; 10,006,852; 9,952,076; 9,933,341; 9,726,527; 9,453,789; 9,200,334; 9,097,640; 9,095,494; 9,092,034; 8,975,595; 8,753,573; 8,233,146; 8,140,300; 7,544,326; 7,201,875; 7,129,505; 6,821,740; 6,813,017; 6,809,804; 6,372,506; 5,700,692; 5,643,796; 5,627,040; 5,620,842; 5,602,039; 4,987,086; 4,498,766; the disclosures of which are herein incorporated by reference in their entirety. In some embodiments where the flow cytometer is a particle sorter, the particle sorter is an image enabled particle sorter. Image enabled particle sorters are described in U.S. Provisional Patent Application Nos. 63/431,803 and 63/465,057; the disclosures of which are herein incorporated by reference in their entirety.

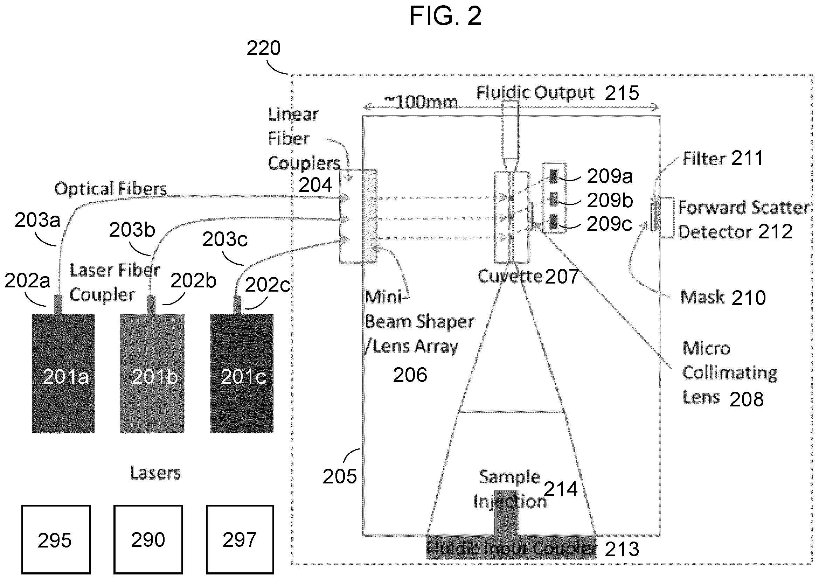

**FIG. 2** presents a schematic diagram of a flow cytometer comprising an integrated optofluidic interrogation module 220 according to certain embodiments of the invention. Integrated optofluidic interrogation module 220 includes flow cell 205, linear fiber array 204, focusing optical system 206 comprising a plurality of microlenses, cuvette 207, collimating lens 208, fiber optic light collection element couplers 209a-209c, optical mask 210, optical filter 211, forward scatter detector 212, sheath fluid input coupler 213, sample fluid input coupler 214, and fluidic output coupler 215. The flow cytometer shown in **FIG. 2** includes lasers 201a, 201b and 201c which are operably attached to optical fibers 203a, 203b and 203c via fiber optic light conveyor connectors 202a, 202b and 202c, respectively. Optical fibers 203a-203c terminate at linear fiber array 204, which is integrated with flow cell 205 and comprises a plurality of non-circular core optical fibers (e.g., described above with respect to **FIG. 1B**) each configured to project excitation wavelength light onto a corresponding focal spot within cuvette 207 of flow cell 205. In the embodiment of **FIG. 2****,** optofluidic interrogation module 220 includes a collimating lens 208 attached to an outer surface of the cuvette 207. Collimating lens 208 is configured to collimate particle-modulated light emitting from cuvette 207. Forward scattered light from cuvette 207 proceeds to forward scatter detector 212 after passing through optical mask 210 and optical filter 211. Side scattered and/or fluorescent light can be collected by fiber optic light collection elements (not shown) operably attached to fiber optic light collection element connectors 209a-209c. Sample fluid may be supplied to flow cell 205 via sample fluid input coupler 214, which may itself be fluidically connected to a sample fluid line (e.g., tubing) fluidically connected to a sample fluid reservoir. Sheath fluid may be supplied to flow cell 205 via sheath fluid input coupler 213, which may itself be fluidically connected to a sheath fluid line fluidically connected to a sheath fluid reservoir. Sheath fluid emitting from the flow cell (e.g., waste fluid) may be removed via fluidic output coupler 215. A waste line may be fluidically connected to fluidic output coupler 215, which may deposit the waste fluid in a waste reservoir.

In operation, cytometer operation is controlled by a controller/processor 290, and the measurement data from the detectors can be stored in the memory 295 and processed by the controller/processor 290. Although not shown explicitly, the controller/processor 290 is coupled to the detectors to receive the output signals therefrom, and may also be coupled to electrical and electromechanical components of the flow cytometer to control the lasers 201a-201c, fluid flow parameters, and the like. Input/output (I/O) capabilities 297 may be provided also in the system. The memory 295, controller/processor 290, and I/O 297 may be entirely provided as an integral part of the flow cytometer. In such an embodiment, a display may also form part of the I/O capabilities 297 for presenting experimental data to users of the cytometer 210. Alternatively, some or all of the memory 295 and controller/processor 290 and I/O capabilities may be part of one or more external devices such as a general purpose computer. In some embodiments, some or all of the memory 295 and controller/processor 290 can be in wireless or wired communication with the cytometer 210. The controller/processor 290 in conjunction with the memory 295 and the I/O 297 can be configured to perform various functions related to the preparation and analysis of a flow cytometer experiment.

Different fluorescent molecules in a fluorochrome panel used for a flow cytometer experiment will emit light in their own characteristic wavelength bands. The particular fluorescent labels used for an experiment and their associated fluorescent emission bands may be selected to generally coincide with the filter windows of the detectors. The I/O 297 can be configured to receive data regarding a flow cytometer experiment having a panel of fluorescent labels and a plurality of cell populations having a plurality of markers, each cell population having a subset of the plurality of markers. The I/O 297 can also be configured to receive biological data assigning one or more markers to one or more cell populations, marker density data, emission spectrum data, data assigning labels to one or more markers, and cytometer configuration data. Flow cytometer experiment data, such as label spectral characteristics and flow cytometer configuration data can also be stored in the memory 295. The controller/processor 290 can be configured to evaluate one or more assignments of labels to markers.

In some embodiments, the subject flow cytometers are particle sorting systems that are configured to sort particles with an enclosed particle sorting module, such as those described in U.S. Patent Publication No. 2017/0299493, filed on March 28, 2017, the disclosure of which is incorporated herein by reference. In certain embodiments, particles (e.g., cells) of the sample are sorted using a sort decision module having a plurality of sort decision units, such as those described in U.S. Patent Publication No. 2020/0256781, filed on December 23, 2019, the disclosure of which is incorporated herein by reference. In some embodiments, systems for sorting components of a sample include a particle sorting module having deflection plates, such as described in U.S. Patent Publication No. 2017/0299493, filed on March 28, 2017, the disclosure of which is incorporated herein by reference.

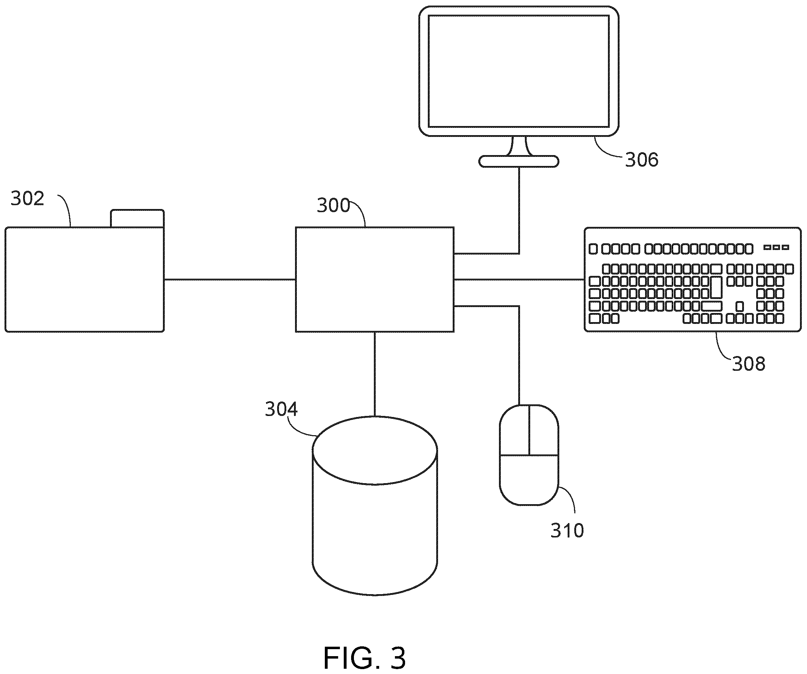

**FIG. 3** shows a functional block diagram for one example of a control system, such as a processor 300, for analyzing and displaying biological events. A processor 300 can be configured to implement a variety of processes for controlling graphic display of biological events.

A flow cytometer or sorting system 302 can be configured to acquire biological event data. For example, a flow cytometer can generate flow cytometric event data (e.g., particle-modulated light data). The flow cytometer 302 can be configured to provide biological event data to the processor 300. A data communication channel can be included between the flow cytometer 302 and the processor 300. The biological event data can be provided to the processor 300 via the data communication channel.

The processor 300 can be configured to receive biological event data from the flow cytometer 302. The biological event data received from the flow cytometer 302 can include flow cytometric event data. The processor 300 can be configured to provide a graphical display including a first plot of biological event data to a display device 306. The processor 300 can be further configured to render a region of interest as a gate (e.g., a first gate) around a population of biological event data shown by the display device 306, overlaid upon the first plot, for example. In some embodiments, the gate can be a logical combination of one or more graphical regions of interest drawn upon a single parameter histogram or bivariate plot. In some embodiments, the display can be used to display particle parameters or saturated detector data.

The processor 300 can be further configured to display the biological event data on the display device 306 within the gate differently from other events in the biological event data outside of the gate. For example, the processor 300 can be configured to render the color of biological event data contained within the gate to be distinct from the color of biological event data outside of the gate. The display device 306 can be implemented as a monitor, a tablet computer, a smartphone, or other electronic device configured to present graphical interfaces.

The processor 300 can be configured to receive a gate selection signal identifying the gate from a first input device. For example, the first input device can be implemented as a mouse 310. The mouse 310 can initiate a gate selection signal to the processor 300 identifying the gate to be displayed on or manipulated via the display device 306 (e.g., by clicking on or in the desired gate when the cursor is positioned there). In some implementations, the first device can be implemented as the keyboard 308 or other means for providing an input signal to the processor 300 such as a touchscreen, a stylus, an optical detector, or a voice recognition system. Some input devices can include multiple inputting functions. In such implementations, the inputting functions can each be considered an input device. For example, as shown in **FIG. 3****,** the mouse 310 can include a right mouse button and a left mouse button, each of which can generate a triggering event.

The triggering event can cause the processor 300 to alter the manner in which the data is displayed, which portions of the data is actually displayed on the display device 306, and/or provide input to further processing such as selection of a population of interest for particle sorting.

In some embodiments, the processor 300 can be configured to detect when gate selection is initiated by the mouse 310. The processor 300 can be further configured to automatically modify plot visualization to facilitate the gating process. The modification can be based on the specific distribution of biological event data received by the processor 300. In some embodiments, the processor 300 expands the first gate such that a second gate is generated (e.g., as discussed above).

The processor 300 can be connected to a storage device 304. The storage device 304 can be configured to receive and store biological event data from the processor 300. The storage device 304 can also be configured to receive and store flow cytometric event data from the processor 300. The storage device 304 can be further configured to allow retrieval of biological event data, such as flow cytometric event data, by the processor 300.

The display device 306 can be configured to receive display data from the processor 300. The display data can comprise plots of biological event data and gates outlining sections of the plots. The display device 306 can be further configured to alter the information presented according to input received from the processor 300 in conjunction with input from the flow cytometer 302, the storage device 304, the keyboard 308, and/or the mouse 310.

In some implementations the processor 300 can generate a user interface to receive example events for sorting. For example, the user interface can include a mechanism for receiving example events or example images. The example events or images or an example gate can be provided prior to collection of event data for a sample or based on an initial set of events for a portion of the sample.

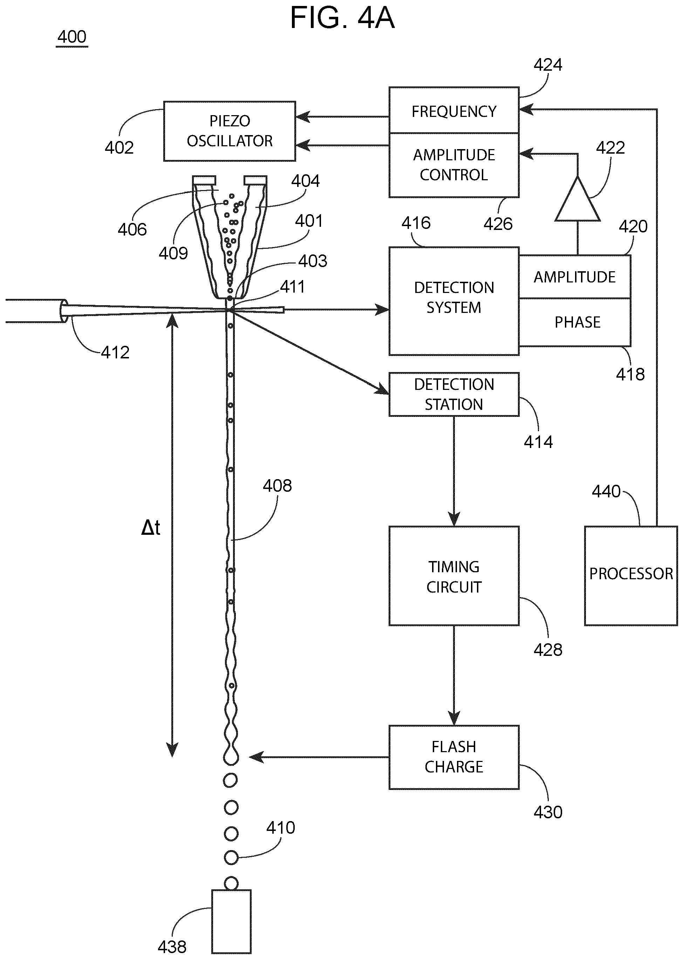

**FIG. 4A** is a schematic drawing of a particle sorter system 400 (e.g., the flow cytometer 302) in accordance with one embodiment presented herein. In some embodiments, the particle sorter system 400 is a cell sorter system. As shown in **FIG. 4A****,** a drop formation transducer 402 (e.g., piezo-oscillator) is coupled to a fluid conduit 401, which can be coupled to, can include, or can be, a nozzle 403. Within the fluid conduit 401, sheath fluid 404 hydrodynamically focuses a sample fluid 406 comprising particles 409 into a moving fluid column 408 (e.g., a stream). Within the moving fluid column 408, particles 409 (e.g., cells) are lined up in single file to cross a monitored area 411 (e.g., where laser-stream intersect), irradiated by an irradiation source 412 (e.g., a laser). Vibration of the drop formation transducer 402 causes moving fluid column 408 to break into a plurality of drops 410, some of which contain particles 409.

In operation, a detection station 414 (e.g., an event detector) identifies when a particle of interest (or cell of interest) crosses the monitored area 411. Detection station 414 feeds into a timing circuit 428, which in turn feeds into a flash charge circuit 430. At a drop break off point, informed by a timed drop delay (Δt), a flash charge can be applied to the moving fluid column 408 such that a drop of interest carries a charge. The drop of interest can include one or more particles or cells to be sorted. The charged drop can then be sorted by activating deflection plates (not shown) to deflect the drop into a vessel such as a collection tube or a multi- well or microwell sample plate where a well or microwell can be associated with drops of particular interest. As shown in **FIG. 4A****,** the drops can be collected in a drain receptacle 438.

A detection system 416 (e.g., a drop boundary detector) serves to automatically determine the phase of a drop drive signal when a particle of interest passes the monitored area 411. An exemplary drop boundary detector is described in U.S. Pat. No. 7,679,039, which is incorporated herein by reference in its entirety. The detection system 416 allows the instrument to accurately calculate the place of each detected particle in a drop. The detection system 416 can feed into an amplitude signal 420 and/or phase 418 signal, which in turn feeds (via amplifier 422) into an amplitude control circuit 426 and/or frequency control circuit 424. The amplitude control circuit 426 and/or frequency control circuit 424, in turn, controls the drop formation transducer 402. The amplitude control circuit 426 and/or frequency control circuit 424 can be included in a control system.

In some implementations, sort electronics (e.g., the detection system 416, the detection station 414 and a processor 440) can be coupled with a memory configured to store the detected events and a sort decision based thereon. The sort decision can be included in the event data for a particle. In some implementations, the detection system 416 and the detection station 414 can be implemented as a single detection unit or communicatively coupled such that an event measurement can be collected by one of the detection system 416 or the detection station 414 and provided to the non-collecting element.

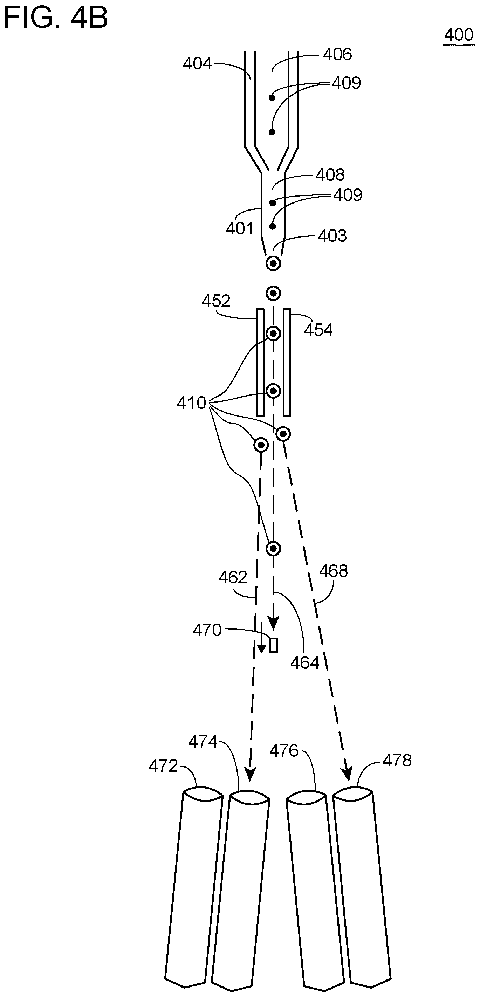

**FIG. 4B** is a schematic drawing of a particle sorter system, in accordance with one embodiment presented herein. The particle sorter system 400 shown in **FIG. 4B****,** includes deflection plates 452 and 454. A charge can be applied via a stream-charging wire in a barb. This creates a stream of droplets 410 containing particles 409 for analysis. The particles can be illuminated with one or more light sources (e.g., lasers) to generate light scatter and fluorescence information. The information for a particle is analyzed such as by sorting electronics or other detection system (not shown in **FIG.** 4B). The deflection plates 452 and 454 can be independently controlled to attract or repel the charged droplet to guide the droplet toward a destination collection vessel (e.g., one of 472, 474, 476, or 478). As shown in **FIG. 4B****,** the deflection plates 452 and 454 can be controlled to direct a particle along a first path 462 toward the vessel 474 or along a second path 468 toward the vessel 478. If the particle is not of interest (e.g., does not exhibit scatter or illumination information within a specified sort range), deflection plates may allow the particle to continue along a flow path 464. Such uncharged droplets may pass into a waste receptacle such as via aspirator 470.

The sorting electronics can be included to initiate collection of measurements, receive fluorescence signals for particles, and determine how to adjust the deflection plates to cause sorting of the particles. Example implementations of the embodiment shown in **FIG. 4B** include the BD FACSAria^{™} line of flow cytometers commercially provided by Becton, Dickinson and Company (Franklin Lakes, NJ).

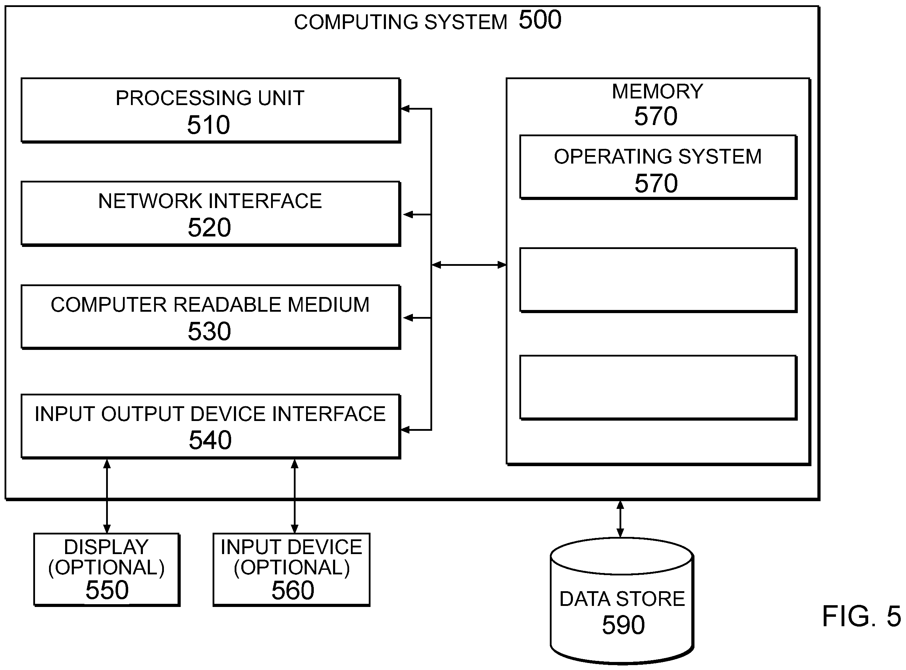

**FIG. 5** depicts a general architecture of an example computing device 500 according to certain embodiments. The general architecture of the computing device 500 depicted in **FIG. 5** includes an arrangement of computer hardware and software components. It is not necessary, however, that all of these generally conventional elements be shown in order to provide an enabling disclosure. As illustrated, the computing device 500 includes a processing unit 510, a network interface 520, a computer readable medium drive 530, an input/output device interface 540, a display 550, and an input device 560, all of which may communicate with one another by way of a communication bus. The network interface 520 may provide connectivity to one or more networks or computing systems. The processing unit 510 may thus receive information and instructions from other computing systems or services via a network. The processing unit 510 may also communicate to and from memory 570 and further provide output information for an optional display 550 via the input/output device interface 540. For example, an analysis software (e.g., data analysis software or program such as FlowJo^{®}) stored as executable instructions in the non-transitory memory of the analysis system can display the flow cytometry event data to a user. The input/output device interface 540 may also accept input from the optional input device 560, such as a keyboard, mouse, digital pen, microphone, touch screen, gesture recognition system, voice recognition system, gamepad, accelerometer, gyroscope, or other input device.

The memory 570 may contain computer program instructions (grouped as modules or components in some embodiments) that the processing unit 510 executes in order to implement one or more embodiments. The memory 570 generally includes RAM, ROM and/or other persistent, auxiliary or non-transitory computer-readable media. The memory 570 may store an operating system 572 that provides computer program instructions for use by the processing unit 510 in the general administration and operation of the computing device 500. Data may be stored in data storage device 590. The memory 570 may further include computer program instructions and other information for implementing aspects of the present disclosure.

### METHODS OF ANALYZING A SAMPLE

As discussed above, aspects of the invention include methods of analyzing a sample. Methods of interest include (a) introducing a particulate sample into a flow cytometer comprising a plurality of light sources, and an integrated optofluidic interrogation module of the invention, and (b) flow cytometrically analyzing the particulate sample.

The sample analyzed can be any sample that is of interest to a user. In certain embodiments, the sample contains a biological component, or is a biological sample. The term "biological sample" is used in its conventional sense to refer to a sample derived from or containing a whole organism, e.g., prokaryotic cells, eukaryotic cells, plants, fungi or a subset of animal tissues, cells or component parts which may in certain instances be found in blood, mucus, lymphatic fluid, synovial fluid, cerebrospinal fluid, saliva, bronchoalveolar lavage, amniotic fluid, amniotic cord blood, urine, vaginal fluid and semen. As such, a "biological sample" refers to both the native organism or a subset of its tissues as well as to: a homogenate; isolated, purified or enriched biological particles (e.g., DNA, RNA, proteins, sub-cellular organelles, etc.); and lysates or extracts prepared from the organism or a subset of its tissues, including but not limited to, for example, plasma, serum, spinal fluid, lymph fluid, sections of the skin, respiratory, gastrointestinal, cardiovascular, and genitourinary tracts, tears, saliva, milk, blood cells, tumors, organs. Biological samples may be any type of organismic tissue, including both healthy and diseased tissue (e.g., cancerous, malignant, necrotic, etc.). In certain embodiments, the biological sample is a liquid sample, such as blood or derivative thereof, e.g., plasma, tears, urine, semen, etc., where in some instances the sample is a blood sample, including whole blood, such as blood obtained from venipuncture or fingerstick (where the blood may or may not be combined with any reagents prior to assay, such as preservatives, anticoagulants, etc.).

In certain embodiments the source of the sample is a "mammal" or "mammalian", where these terms are used broadly to describe organisms which are within the class Mammalia, including the orders carnivore (e.g., dogs and cats), Rodentia (e.g., mice, guinea pigs, and rats), and primates (e.g., humans, chimpanzees, and monkeys). In some instances, the subjects are humans. The methods may be applied to samples obtained from human subjects of both genders and at any stage of development (i.e., neonates, infant, juvenile, adolescent, adult), where in certain embodiments the human subject is a juvenile, adolescent or adult. While embodiments of the present disclosure may be applied to samples from a human subject, it is to be understood that the methods may also be carried-out on samples from other animal subjects (that is, in "non-human subjects") such as, but not limited to, birds, mice, rats, dogs, cats, livestock and horses.

Cells of interest may be targeted for characterized according to a variety of parameters, such as a phenotypic characteristic identified via the attachment of a particular fluorescent label to cells of interest. In some embodiments, the system is configured to deflect analyzed droplets that are determined to include a target cell. A variety of cells may be characterized using the subject methods. Target cells of interest include, but are not limited to, stem cells, T cells, dendritic cells, B Cells, granulocytes, leukemia cells, lymphoma cells, virus cells (e.g., HIV cells), NK cells, macrophages, monocytes, fibroblasts, epithelial cells, endothelial cells, and erythroid cells. Target cells of interest include cells that have a convenient cell surface marker or antigen that may be captured or labelled by a convenient affinity agent or conjugate thereof. For example, the target cell may include a cell surface antigen such as CD11b, CD123, CD14, CD15, CD16, CD19, CD193, CD2, CD25, CD27, CD3, CD335, CD36, CD4, CD43, CD45RO, CD56, CD61, CD7, CD8, CD34, CD1c, CD23, CD304, CD235a, T cell receptor alpha/beta, T cell receptor gamma/delta, CD253, CD95, CD20, CD105, CD117, CD120b, Notch4, Lgr5 (N-Terminal), SSEA-3, TRA-1-60 Antigen, Disialoganglioside GD2 and CD71. In some embodiments, the target cell is selected from HIV containing cell, a Treg cell, an antigen-specific T -cell populations, tumor cells or hematopoietic progenitor cells (CD34+) from whole blood, bone marrow or cord blood.

Methods of interest may further include employing particles in research, laboratory testing, or therapy. In some embodiments, the subject methods include obtaining individual cells prepared from a target fluidic or tissue biological sample. For example, the subject methods include obtaining cells from fluidic or tissue samples to be used as a research or diagnostic specimen for diseases such as cancer. Likewise, the subject methods include obtaining cells from fluidic or tissue samples to be used in therapy. A cell therapy protocol is a protocol in which viable cellular material including, e.g., cells and tissues, may be prepared and introduced into a subject as a therapeutic treatment. Conditions that may be treated by the administration of the flow cytometrically sorted sample include, but are not limited to, blood disorders, immune system disorders, organ damage, etc.

A typical cell therapy protocol may include the following steps: sample collection, cell isolation, genetic modification, culture, and expansion in vitro, cell harvesting, sample volume reduction and washing, bio-preservation, storage, and introduction of cells into a subject. The protocol may begin with the collection of viable cells and tissues from source tissues of a subject to produce a sample of cells and/or tissues. The sample may be collected via any suitable procedure that includes, e.g., administering a cell mobilizing agent to a subject, drawing blood from a subject, removing bone marrow from a subject, etc. After collecting the sample, cell enrichment may occur via several methods including, e.g., centrifugation based methods, filter based methods, elutriation, magnetic separation methods, fluorescence-activated cell sorting (FACS), and the like. In some cases, the enriched cells may be genetically modified by any convenient method, e.g., nuclease mediated gene editing. The genetically modified cells can be cultured, activated, and expanded in vitro. In some cases, the cells are preserved, e.g., cryopreserved, and stored for future use where the cells are thawed and then administered to a patient, e.g., the cells may be infused in the patient.

### METHODS OF ASSEMBLING A FLOW CYTOMETER

Aspects of the invention additionally include methods of assembling a flow cytometer. Methods of interest include (a) positioning an integrated optofluidic interrogation module into a flow cytometer comprising a plurality of light sources, and (b) operably attaching the plurality of fiber optic light conveyor couplers to the plurality of light sources to assemble the flow cytometer. As described in detail above, integrated optofluidic interrogation modules of the present disclosure include a flow cell comprising a light-accessible flow channel for transporting particles in a flow stream, a linear fiber array integrated with the flow cell and comprising a plurality of non-circular core optical fibers each configured to project excitation wavelength light onto a corresponding focal spot within the flow cell, and a plurality of fiber optic light conveyor couplers for operably attaching the plurality of light sources to the linear fiber array.

As described above, embodiments of the integrated optofluidic interrogation modules include a light detector integrated with the flow cell and an electrical coupler for operably attaching an electrical line to the light detector. In certain cases, assembling the flow cytometer includes operably attaching the electrical line to the electrical coupler. In addition, embodiments of the integrated optofluidic interrogation modules include a plurality of fiber optic light collection element couplers for operably attaching a plurality of fiber optic light collection elements to the flow cell. In some instances, assembling the flow cytometer includes operably attaching the plurality of fiber optic light collection elements to the plurality of fiber optic light collection element couplers. In cases where modules include a sample fluid input coupler for injecting the flow stream into the flow cell, some implementations of the disclosed methods involve fluidically connecting a sample fluid line of the flow cytometer to the sample fluid input coupler. In cases where modules include a sheath fluid input coupler for injecting sheath fluid into the flow cell, some implementations of the disclosed methods involve fluidically connecting a sheath fluid line of the flow cytometer to the sheath fluid input coupler. In cases where modules include a fluidic output coupler for receiving the flow stream from the flow cell, some implementations of the disclosed methods include fluidically connecting a waste line of the flow cytometer to the fluidic output coupler.

However, the methods of assembling a flow cytometer disclosed herein do not include mechanical mounting and alignment. In other words, the optical components are already precisely optically aligned when the integrated optofluidic interrogation module is positioned within the flow cytometer and connected to the relevant components (e.g., lasers, fiber optic light collection elements, electrical line, etc.) by virtue of the integrated nature of the module. In some cases, methods of the invention result in an assembly and/or alignment time that is 20% or less than conventional methods not involving integrated optics, such as 30% or less, such as 50% or less and including 60% or less.

### KITS

As discussed above, aspects of the invention additionally include kits. Kits of interest include an integrated optofluidic interrogation module (e.g., described above). Embodiments of the subject kits include a single integrated optofluidic interrogation module. In certain cases, kits include a plurality of integrated optofluidic interrogation modules. In some such cases, the number of integrated optofluidic interrogation modules in the subject kits may range from 2 to 20, such as 2 to 10, and including 2 to 5.

Kits may additionally include one or more other components useful for assembling a flow cytometer. In some cases, kits include one or more electrical lines for transmitting signals generated by a light detector integrated with the flow cell. In some cases, kits include a plurality of electrical lines, such as 2 or more electrical lines, such as 3 or more electrical lines, such as 4 or more electrical lines, and including 5 or more electrical lines. Kits according to some embodiments include a plurality of fiber optic light collection elements. For example, the number of fiber optic light collection elements may range from 2 to 20, such as 2 to 10. In some instances, kits include fluidic components such as sample fluid lines, sheath fluid lines, and/or waste lines that may be operable attached to the modules.

Kits may further include instructions for practicing the subject methods. These instructions may be present in the subject kits in a variety of forms, one or more of which may be present in the kit. One form in which these instructions may be present is as printed information on a suitable medium or substrate, e.g., a piece or pieces of paper on which the information is printed, in the packaging of the kit, in a package insert, and the like. Yet another form of these instructions is a computer readable medium, e.g., diskette, compact disk (CD), portable flash drive, and the like, on which the information has been recorded. Yet another form of these instructions that may be present is a website address which may be used via the internet to access the information at a removed site.

### UTILITY

The subject integrated optofluidic interrogation modules, flow cytometers and methods find use in find use in a variety of applications where it is desirable to increase resolution and accuracy in the determination of parameters for analytes (e.g., cells, particles) in a biological sample. For example, the present invention may be employed in order to facilitate flow cytometer assembly, i.e., such that tedious assembly and adjustment is not required. Accordingly, the subject integrated optofluidic interrogation modules, flow cytometers and methods find use where it is desirable to simplify complex flow cytometer assembly that would normally include painstaking mechanical mounting and alignment. The subject integrated optofluidic interrogation modules, flow cytometers and methods may consequently be used to decrease the cost of flow cytometer assembly and improve the robustness of results obtained from flow cytometry. In some embodiments, the present invention may be employed where it is desirable to have modular flow cytometer components, i.e., such that components can be swapped for different modules as required to achieve a functionality of interest. In additional instances, the present invention may be employed where it is desirable to improve flow cytometer collection efficiency.

The present disclosure can be employed to characterize many types of analytes, in particular, analytes relevant to medical diagnosis or protocols for caring for a patient, including but not limited to: proteins (including both free proteins and proteins and proteins bound to the surface of a structure, such as a cell), nucleic acids, viral particles, and the like. Further, samples can be from in vitro or in vivo sources, and samples can be diagnostic samples.

The following is provided by way of example and not by way of limitation.

### EXPERIMENTAL

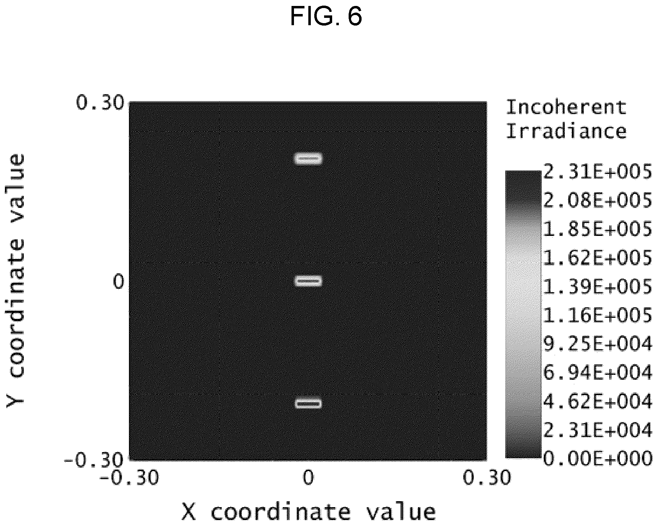

An irradiance profile was obtained for light emitted by a linear fiber array arranged as described in **FIG. 1B****.** The resulting irradiance profile is shown in **FIG. 6****.** As shown in **FIG. 6****,** irradiance is uniform and regularly spaced indicating that the linear fiber array is suitable for use in irradiating the core stream.

Notwithstanding the appended claims, the disclosure is also defined by the following clauses:
1. An integrated optofluidic interrogation module comprising:
   a flow cell comprising a light-accessible flow channel for transporting particles in a flow stream;
   a linear fiber array integrated with the flow cell and comprising a plurality of non-circular core optical fibers each configured to project excitation wavelength light onto a corresponding focal spot within the flow cell; and
   a plurality of fiber optic light conveyor couplers for operably attaching a plurality of light sources to the linear fiber array.
2. The integrated optofluidic interrogation module according to Clause 1, wherein the non-circular core optical fibers are rectangular-core optical fibers.
3. The integrated optofluidic interrogation module according to Clause 2, wherein the non-circular core optical fibers are square-core optical fibers.
4. The integrated optofluidic interrogation module according to any one of the preceding clauses, wherein the non-circular core optical fibers are configured to project excitation wavelength light having a top hat profile onto the focal spots.
5. The integrated optofluidic interrogation module according to any one of the preceding clauses, wherein the non-circular core fibers in the linear fiber array are vertically stacked.
6. The integrated optofluidic interrogation module according to Clause 5, wherein the cores of adjacent non-circular core fibers in the linear fiber array are separated from each other by a distance ranging from 0.1 mm to 0.3 mm.
7. The integrated optofluidic interrogation module according to any one of the preceding clauses, wherein the linear fiber array is attached to an outer surface of the flow cell.
8. The integrated optofluidic interrogation module according to any one of the preceding clauses, further comprising a focusing optical system integrated with the flow cell and configured to relay the excitation light from the non-circular core optical fibers to the focal spots.
9. The integrated optofluidic interrogation module according to Clause 8, wherein the focusing optical system is embedded in the flow cell.
10. The integrated optofluidic interrogation module according to Clause 8 or 9, wherein the focusing optical system comprises a plurality of microlenses.
11. The integrated optofluidic interrogation module according to any one of the preceding clauses, further comprising a light detector integrated with the flow cell.
12. The integrated optofluidic interrogation module according to Clause 11, further comprising an electrical coupler for operably attaching an electrical line to the light detector.
13. The integrated optofluidic interrogation module according to Clause 12, further comprising the electrical line.
14. The integrated optofluidic interrogation module according to any one of Clauses 11 to 13, further comprising an optical filter positioned between the focal spots and the light detector.
15. The integrated optofluidic interrogation module according to any one of Clauses 11 to 14, further comprising an optical mask positioned between the focal spots and the light detector.
16. The integrated optofluidic interrogation module according to any one of Clauses 11 to 15, wherein the light detector is a forward scatter detector.
17. The integrated optofluidic interrogation module according to any one of Clauses 11 to 16, wherein the light detector is attached to an outer surface of the flow cell.
18. The integrated optofluidic interrogation module according to any one of the preceding clauses, further comprising a plurality of fiber optic light collection element couplers for operably attaching a plurality of fiber optic light collection elements to the flow cell.
19. The integrated optofluidic interrogation module according to Clause 18, wherein the fiber optic light collection element couplers are vertically stacked.
20. The integrated optofluidic interrogation module according to Clause 18 or 19, further comprising the plurality of fiber optic light collection elements.
21. The integrated optofluidic interrogation module according to any one of the preceding clauses, further comprising a sample fluid input coupler for injecting a sample fluid into the flow cell.
22. The integrated optofluidic interrogation module according to any one of the preceding clauses, further comprising a sheath fluid input coupler for injecting sheath fluid into the flow cell.
23. The integrated optofluidic interrogation module according to any one of the preceding clauses, further comprising a fluidic output coupler for receiving the flow stream from the flow cell.
24. The integrated optofluidic interrogation module according to any one of the preceding clauses, wherein the flow cell comprises a cuvette.
25. The integrated optofluidic interrogation module according to Clause 24, further comprising a collimating lens attached to an outer surface of the cuvette.
26. The integrated optofluidic interrogation module according to Clause 25, wherein the collimating lens is an injection compression molded micro lens.
27. The integrated optofluidic interrogation module according to Clause 25 or 26, wherein the collimating lens is a Fresnel lens.
28. The integrated optofluidic interrogation module according to any one of the preceding clauses, wherein the integrated optofluidic interrogation module comprises:
   N non-circular core optical fibers;
   N focal spots; and
   N fiber optic light conveyor couplers,
   wherein N is an integer ranging from 2 to 10.
29. The integrated optofluidic interrogation module according to any one of the preceding clauses, wherein the flow cell has a width ranging from 75 mm to 125 mm.
30. A flow cytometer comprising:
   a plurality of light sources; and
   an integrated optofluidic interrogation module comprising:
      a flow cell comprising a light-accessible flow channel for transporting particles in a flow stream;
      a linear fiber array integrated with the flow cell and comprising a plurality of non-circular core optical fibers each configured to project excitation wavelength light onto a corresponding focal spot within the flow cell; and
      a plurality of fiber optic light conveyor couplers for operably attaching the plurality of light sources to the linear fiber array.
31. The flow cytometer according to Clause 30, wherein the non-circular core optical fibers are rectangular-core optical fibers.
32. The flow cytometer according to Clause 31, wherein the non-circular core optical fibers are square-core optical fibers.
33. The flow cytometer according to any one of Clauses 30 to 32, wherein the non-circular core optical fibers are configured to project excitation wavelength light having a top hat profile onto the focal spots.
34. The flow cytometer according to any one of Clauses 30 to 33, wherein the non-circular core fibers in the linear fiber array are vertically stacked.
35. The flow cytometer according to Clause 34, wherein the cores of adjacent non-circular core fibers in the linear fiber array are separated from each other by a distance ranging from 0.1 mm to 0.3 mm.
36. The flow cytometer according to any one of Clauses 30 to 35, wherein the linear fiber array is attached to an outer surface of the flow cell.
37. The flow cytometer according to any one of Clauses 30 to 36, wherein the integrated optofluidic interrogation module comprises a focusing optical system integrated with the flow cell and configured to relay the excitation light from the non-circular core optical fibers to the focal spots.
38. The flow cytometer according to Clause 37, wherein the focusing optical system is embedded in the flow cell.
39. The flow cytometer according to Clause 37 or 38, wherein the focusing optical system comprises a plurality of microlenses.
40. The flow cytometer according to any one of Clauses 30 to 39, wherein the integrated optofluidic interrogation module comprises a light detector integrated with the flow cell.
41. The flow cytometer according to Clause 40, wherein the integrated optofluidic interrogation module comprises an electrical coupler for operably attaching an electrical line to the light detector.
42. The flow cytometer according to Clause 41, further comprising the electrical line.
43. The flow cytometer according to any one of Clauses 40 to 42, wherein the integrated optofluidic interrogation module comprises an optical filter positioned between the focal spots and the light detector.
44. The flow cytometer according to any one of Clauses 40 to 43, wherein the integrated optofluidic interrogation module comprises an optical mask positioned between the focal spots and the light detector.
45. The flow cytometer according to any one of Clauses 40 to 44, wherein the light detector is a forward scatter detector.
46. The flow cytometer according to any one of Clauses 40 to 45, wherein the light detector is attached to an outer surface of the flow cell.
47. The flow cytometer according to any one of Clauses 30 to 46, wherein the integrated optofluidic interrogation module comprises a plurality of fiber optic light collection element couplers for operably attaching a plurality of fiber optic light collection elements to the flow cell.
48. The flow cytometer according to Clause 47, wherein the fiber optic light collection element couplers are vertically stacked.
49. The flow cytometer according to Clause 47 or 48, further comprising the plurality of fiber optic light collection elements.
50. The flow cytometer according to Clause 49, further comprising a plurality of light detectors each operably attached to a fiber optic light collection element in the plurality.
51. The flow cytometer according to any one of Clauses 30 to 50, wherein the integrated optofluidic interrogation module comprises a sample fluid input coupler for injecting a sample fluid into the flow cell.
52. The flow cytometer according to any one of Clauses 30 to 51, wherein the integrated optofluidic interrogation module comprises a sheath fluid input coupler for injecting sheath fluid into the flow cell.
53. The flow cytometer according to any one of Clauses 30 to 52, wherein the integrated optofluidic interrogation module comprises a fluidic output coupler for receiving the flow stream from the flow cell.
54. The flow cytometer according to any one of Clauses 30 to 53, wherein the flow cell comprises a cuvette.
55. The flow cytometer according to Clause 54, wherein the integrated optofluidic interrogation module comprises a collimating lens attached to an outer surface of the cuvette.
56. The flow cytometer according to Clause 55, wherein the collimating lens is an injection compression molded micro lens.
57. The flow cytometer according to Clause 55 or 56, wherein the collimating lens is a Fresnel lens.
58. The flow cytometer according to any one of Clauses 30 to 57, wherein the integrated optofluidic interrogation module comprises:
   N non-circular core optical fibers;
   N focal spots; and
   N fiber optic light conveyor couplers,
   wherein N is an integer ranging from 2 to 10.
59. The flow cytometer according to any one of Clauses 30 to 58, wherein the flow cell has a width ranging from 75 mm to 125 mm.
60. A method of analyzing a sample, the method comprising:
   (a) introducing a particulate sample into a flow cytometer comprising:
      a plurality of light sources; and
      an integrated optofluidic interrogation module comprising:
         a flow cell comprising a light-accessible flow channel for transporting particles in a flow stream;
         a linear fiber array integrated with the flow cell and comprising a plurality of non-circular core optical fibers each configured to project excitation wavelength light onto a corresponding focal spot within the flow cell; and
         a plurality of fiber optic light conveyor couplers for operably attaching the plurality of light sources to the linear fiber array; and
   (b) flow cytometrically analyzing the particulate sample.
61. The method according to Clause 60, wherein the non-circular core optical fibers are rectangular-core optical fibers.
62. The method according to Clause 61, wherein the non-circular core optical fibers are square-core optical fibers.
63. The method according to any one of Clauses 60 to 62, wherein the non-circular core optical fibers are configured to project excitation wavelength light having a top hat profile onto the focal spots.
64. The method according to any one of Clauses 60 to 63, wherein the non-circular core fibers in the linear fiber array are vertically stacked.
65. The method according to Clause 64, wherein the cores of adjacent non-circular core fibers in the linear fiber array are separated from each other by a distance ranging from 0.1 mm to 0.3 mm.
66. The method according to any one of Clauses 60 to 65, wherein the linear fiber array is attached to an outer surface of the flow cell.
67. The method according to any one of Clauses 60 to 66, wherein the integrated optofluidic interrogation module comprises a focusing optical system integrated with the flow cell and configured to relay the excitation light from the non-circular core optical fibers to the focal spots.
68. The method according to Clause 67, wherein the focusing optical system is embedded in the flow cell.
69. The method according to Clause 67 or 68, wherein the focusing optical system comprises a plurality of microlenses.
70. The method according to any one of Clauses 60 to 69, wherein the integrated optofluidic interrogation module comprises a light detector integrated with the flow cell.
71. The method according to Clause 70, wherein the integrated optofluidic interrogation module comprises an electrical coupler for operably attaching an electrical line to the light detector.
72. The method according to Clause 71, wherein the flow cytometer further comprises the electrical line.
73. The method according to any one of Clauses 60 to 72, wherein the integrated optofluidic interrogation module comprises an optical filter positioned between the focal spots and the light detector.
74. The method according to any one of Clauses 70 to 73, wherein the integrated optofluidic interrogation module comprises an optical mask positioned between the focal spots and the light detector.
75. The method according to any one of Clauses 70 to 74, wherein the light detector is a forward scatter detector.
76. The method according to any one of Clauses 70 to 75, wherein the light detector is attached to an outer surface of the flow cell.
77. The method according to any one of Clauses 60 to 76, wherein the integrated optofluidic interrogation module comprises a plurality of fiber optic light collection element couplers for operably attaching a plurality of fiber optic light collection elements to the flow cell.
78. The method according to Clause 77, wherein the fiber optic light collection element couplers are vertically stacked.
79. The method according to Clause 77 or 78, wherein the flow cytometer further comprises the plurality of fiber optic light collection elements.
80. The method according to Clause 79, wherein the flow cytometer further comprises a plurality of light detectors each operably attached to a fiber optic light collection element in the plurality.
81. The method according to any one of Clauses 60 to 80, wherein the integrated optofluidic interrogation module comprises a sample fluid input coupler for injecting a sample fluid into the flow cell.
82. The method according to any one of Clauses 60 to 81, wherein the integrated optofluidic interrogation module comprises a sheath fluid input coupler for injecting sheath fluid into the flow cell.
83. The method according to any one of Clauses 60 to 82, wherein the integrated optofluidic interrogation module comprises a fluidic output coupler for receiving the flow stream from the flow cell.
84. The method according to any one of Clauses 60 to 83, wherein the flow cell comprises a cuvette.
85. The method according to Clause 84, wherein the integrated optofluidic interrogation module comprises a collimating lens attached to an outer surface of the cuvette.
86. The method according to Clause 85, wherein the collimating lens is an injection compression molded micro lens.
87. The method according to Clause 85 or 86, wherein the collimating lens is a Fresnel lens.
88. The method according to any one of Clauses 60 to 87, wherein the integrated optofluidic interrogation module comprises:
   N non-circular core optical fibers;
   N focal spots; and
   N fiber optic light conveyor couplers,
   wherein N is an integer ranging from 2 to 10.
89. The method according to any one of Clauses 60 to 88, wherein the flow cell has a width ranging from 75 mm to 125 mm.
90. A method of assembling a flow cytometer, the method comprising:
   (a) positioning an integrated optofluidic interrogation module into a flow cytometer comprising a plurality of light sources, wherein the integrated optofluidic interrogation module comprises:
      a flow cell comprising a light-accessible flow channel for transporting particles in a flow stream;
      a linear fiber array integrated with the flow cell and comprising a plurality of non-circular core optical fibers each configured to project excitation wavelength light onto a corresponding focal spot within the flow cell; and
      a plurality of fiber optic light conveyor couplers for operably attaching the plurality of light sources to the linear fiber array; and
   (b) operably attaching the plurality of fiber optic light conveyor couplers to the plurality of light sources to assemble the flow cytometer.
91. The method according to Clause 90, wherein the non-circular core optical fibers are rectangular-core optical fibers.
92. The method according to Clause 91, wherein the non-circular core optical fibers are square-core optical fibers.
93. The method according to any one of Clauses 90 to 92, wherein the non-circular core optical fibers are configured to project excitation wavelength light having a top hat profile onto the focal spots.
94. The method according to any one of Clauses 90 to 93, wherein the non-circular core fibers in the linear fiber array are vertically stacked.
95. The method according to Clause 94, wherein the cores of adjacent non-circular core fibers in the linear fiber array are separated from each other by a distance ranging from 0.1 mm to 0.3 mm.
96. The method according to any one of Clauses 90 to 95, wherein the linear fiber array is attached to an outer surface of the flow cell.
97. The method according to any one of Clauses 90 to 96, wherein the integrated optofluidic interrogation module comprises a focusing optical system integrated with the flow cell and configured to relay the excitation light from the non-circular core optical fibers to the focal spots.
98. The method according to Clause 97, wherein the focusing optical system is embedded in the flow cell.
99. The method according to Clause 97 or 98, wherein the focusing optical system comprises a plurality of microlenses.
100. The method according to any one of Clauses 90 to 99, wherein the integrated optofluidic interrogation module further comprises a light detector integrated with the flow cell.
101. The method according to Clause 100, wherein the integrated optofluidic interrogation module comprises an electrical coupler for operably attaching an electrical line to the light detector.
102. The method according to Clause 101, further comprising operably attaching the electrical line to the electrical coupler.
103. The method according to any one of Clauses 100 to 102, wherein the integrated optofluidic interrogation module comprises an optical filter positioned between the focal spots and the light detector.
104. The method according to any one of Clauses 100 to 103, wherein the integrated optofluidic interrogation module comprises an optical mask positioned between the focal spots and the light detector.
105. The method according to any one of Clauses 100 to 104, wherein the light detector is a forward scatter detector.
106. The method according to any one of Clauses 100 to 105, wherein the light detector is attached to an outer surface of the flow cell.
107. The method according to any one of Clauses 90 to 106, wherein the integrated optofluidic interrogation module comprises a plurality of fiber optic light collection element couplers for operably attaching a plurality of fiber optic light collection elements to the flow cell.
108. The method according to Clause 107, wherein the fiber optic light collection element couplers are vertically stacked.
109. The method according to Clause 107 or 108, further comprising operably attaching the plurality of fiber optic light collection elements to the plurality of fiber optic light collection element couplers.
110. The method according to any one of Clauses 90 to 109, wherein the integrated optofluidic interrogation module comprises a sample fluid input coupler for injecting a sample fluid into the flow cell.
111. The method according to Clause 110, further comprising fluidically connecting a sample fluid line of the flow cytometer to the sample fluid input coupler.
112. The method according to any one of Clauses 90 to 111, wherein the integrated optofluidic interrogation module comprises a sheath fluid input coupler for injecting sheath fluid into the flow cell.
113. The method according to Clause 112, further comprising fluidically connecting a sheath fluid line of the flow cytometer to the sheath fluid input coupler.
114. The method according to any one of Clauses 90 to 113, wherein the integrated optofluidic interrogation module comprises a fluidic output coupler for receiving the flow stream from the flow cell.
115. The method according to Clause 114, further comprising fluidically connecting a waste line of the flow cytometer to the fluidic output coupler.
116. The method according to any one of Clauses 90 to 115, wherein the flow cell comprises a cuvette.
117. The method according to Clause 116, wherein the integrated optofluidic interrogation module comprises a comprising a collimating lens attached to an outer surface of the cuvette.
118. The method according to Clause 117, wherein the collimating lens is an injection compression molded micro lens.
119. The method according to Clause 117 or 118, wherein the collimating lens is a Fresnel lens.
120. The method according to any one of Clauses 90 to 119, wherein the integrated optofluidic interrogation module comprises:
   N non-circular core optical fibers;
   N focal spots; and
   N fiber optic light conveyor couplers,
   wherein N is an integer ranging from 2 to 10.
121. The method according to any one of Clauses 90 to 120, wherein the flow cell has a width ranging from 75 mm to 125 mm.
122. A kit comprising:
   an integrated optofluidic interrogation module comprising:
   a flow cell comprising a light-accessible flow channel for transporting particles in a flow stream;
   a linear fiber array integrated with the flow cell and comprising a plurality of non-circular core optical fibers each configured to project excitation wavelength light onto a corresponding focal spot within the flow cell; and
   a plurality of fiber optic light conveyor couplers for operably attaching a plurality of light sources to the linear fiber array.
123. The kit according to Clause 122, wherein the non-circular core optical fibers are rectangular-core optical fibers.
124. The kit according to Clause 123, wherein the non-circular core optical fibers are square-core optical fibers.
125. The kit according to any one of Clauses 122 to 124, wherein the non-circular core optical fibers are configured to project excitation wavelength light having a top hat profile onto the focal spots.
126. The kit according to any one of Clauses 122 to 125, wherein the non-circular core fibers in the linear fiber array are vertically stacked.
127. The kit according to Clause 126, wherein the cores of adjacent non-circular core fibers in the linear fiber array are separated from each other by a distance ranging from 0.1 mm to 0.3 mm.
128. The kit according to any one of Clauses 122 to 127, wherein the linear fiber array is attached to an outer surface of the flow cell.
129. The kit according to any one of Clauses 122 to 128, wherein the integrated optofluidic interrogation module comprises a focusing optical system integrated with the flow cell and configured to relay the excitation light from the non-circular core optical fibers to the focal spots.
130. The kit according to Clause 129, wherein the focusing optical system is embedded in the flow cell.
131. The kit according to Clause 129 or 130, wherein the focusing optical system comprises a plurality of microlenses.
132. The kit according to any one of 122 to 131, wherein the integrated optofluidic interrogation module further comprises a light detector integrated with the flow cell.
133. The kit according to Clause 132, wherein the integrated optofluidic interrogation module further comprises an electrical coupler for operably attaching an electrical line to the light detector.
134. The kit according to Clause 133, further comprising the electrical line.
135. The kit according to any one of Clauses 132 to 134, wherein the integrated optofluidic interrogation module comprises an optical filter positioned between the focal spots and the light detector.
136. The kit according to any one of Clauses 132 to 135, wherein the integrated optofluidic interrogation module comprises an optical mask positioned between the focal spots and the light detector.
137. The kit according to any one of Clauses 132 to 136, wherein the light detector is a forward scatter detector.
138. The kit according to any one of Clauses 132 to 137, wherein the light detector is attached to an outer surface of the flow cell.
139. The kit according to any one of Clauses 122 to 138, wherein the integrated optofluidic interrogation module comprises a plurality of fiber optic light collection element couplers for operably attaching a plurality of fiber optic light collection elements to the flow cell.
140. The kit according to Clause 139, wherein the fiber optic light collection element couplers are vertically stacked.
141. The kit according to Clause 139 or 140, further comprising the plurality of fiber optic light collection elements.
142. The kit according to any one of Clauses 122 to 141, wherein the integrated optofluidic interrogation module comprises a sample fluid input coupler for injecting a sample fluid into the flow cell.
143. The kit according to any one of Clauses 122 to 142, wherein the integrated optofluidic interrogation module comprises a sheath fluid input coupler for injecting sheath fluid into the flow cell.
144. The kit according to any one of Clauses 122 to 143, wherein the integrated optofluidic interrogation module comprises a fluidic output coupler for receiving the flow stream from the flow cell.
145. The kit according to any one of Clauses 122 to 144, wherein the flow cell comprises a cuvette.
146. The kit according to Clause 145, wherein the integrated optofluidic interrogation module comprises a collimating lens attached to an outer surface of the cuvette.
147. The kit according to Clause 146, wherein the collimating lens is an injection compression molded micro lens.
148. The kit according to Clause 146 or 147, wherein the collimating lens is a Fresnel lens.
149. The kit according to any one of Clauses 122 to 148, wherein the integrated optofluidic interrogation module comprises:
   N non-circular core optical fibers;
   N focal spots; and
   N fiber optic light conveyor couplers,
   wherein N is an integer ranging from 2 to 10.
150. The kit according to any one of Clauses 122 to 149, wherein the flow cell has a width ranging from 75 mm to 125 mm.
151. The kit according to any one of Clauses 122 to 150, wherein the kit comprises a plurality of integrated optofluidic interrogation modules.

Although the foregoing invention has been described in some detail by way of illustration and example for purposes of clarity of understanding, it is readily apparent to those of ordinary skill in the art in light of the teachings of this invention that some changes and modifications may be made thereto without departing from the spirit or scope of the appended claims.

Accordingly, the preceding merely illustrates the principles of the invention. It will be appreciated that those skilled in the art will be able to devise various arrangements which, although not explicitly described or shown herein, embody the principles of the invention and are included within its spirit and scope. Furthermore, all examples and conditional language recited herein are principally intended to aid the reader in understanding the principles of the invention and the concepts contributed by the inventors to furthering the art, and are to be construed as being without limitation to such specifically recited examples and conditions. Moreover, all statements herein reciting principles, aspects, and embodiments of the invention as well as specific examples thereof, are intended to encompass both structural and functional equivalents thereof. Additionally, it is intended that such equivalents include both currently known equivalents and equivalents developed in the future, i.e., any elements developed that perform the same function, regardless of structure. Moreover, nothing disclosed herein is intended to be dedicated to the public regardless of whether such disclosure is explicitly recited in the claims.

The scope of the present invention, therefore, is not intended to be limited to the exemplary embodiments shown and described herein. Rather, the scope and spirit of present invention is embodied by the appended claims. In the claims, 35 U.S.C. §112(f) or 35 U.S.C. §112(6) is expressly defined as being invoked for a limitation in the claim only when the exact phrase "means for" or the exact phrase "step for" is recited at the beginning of such limitation in the claim; if such exact phrase is not used in a limitation in the claim, then 35 U.S.C. § 112 (f) or 35 U.S.C. §112(6) is not invoked.

## Claims

1. An integrated optofluidic interrogation module comprising:
a flow cell comprising a light-accessible flow channel for transporting particles in a flow stream;
a linear fiber array integrated with the flow cell and comprising a plurality of non-circular core optical fibers each configured to project excitation wavelength light onto a corresponding focal spot within the flow cell; and
a plurality of fiber optic light conveyor couplers for operably attaching a plurality of light sources to the linear fiber array.

2. The integrated optofluidic interrogation module according to Claim 1, wherein the non-circular core optical fibers are rectangular-core optical fibers.

3. The integrated optofluidic interrogation module according to Claim 2, wherein the non-circular core optical fibers are square-core optical fibers.

4. The integrated optofluidic interrogation module according to any one of the preceding claims, wherein the non-circular core optical fibers are configured to project excitation wavelength light having a top hat profile onto the focal spots.

5. The integrated optofluidic interrogation module according to any one of the preceding claims, wherein the non-circular core fibers in the linear fiber array are vertically stacked.

6. The integrated optofluidic interrogation module according to Claim 5, wherein the cores of adjacent non-circular core fibers in the linear fiber array are separated from each other by a distance ranging from 0.1 mm to 0.3 mm.

7. The integrated optofluidic interrogation module according to any one of the preceding claims, wherein the linear fiber array is attached to an outer surface of the flow cell.

8. The integrated optofluidic interrogation module according to any one of the preceding claims, further comprising a focusing optical system integrated with the flow cell and configured to relay the excitation light from the non-circular core optical fibers to the focal spots.

9. The integrated optofluidic interrogation module according to Claim 8, wherein the focusing optical system is embedded in the flow cell.

10. The integrated optofluidic interrogation module according to Claim 8 or 9, wherein the focusing optical system comprises a plurality of microlenses.

11. The integrated optofluidic interrogation module according to any one of the preceding claims, further comprising a light detector integrated with the flow cell.

12. The integrated optofluidic interrogation module according to Claim 11, further comprising an optical filter positioned between the focal spots and the light detector.

13. The integrated optofluidic interrogation module according to any one of Claims 11 to 12, wherein the light detector is attached to an outer surface of the flow cell.

14. A flow cytometer comprising:
a plurality of light sources; and
an integrated optofluidic interrogation module comprising:
a flow cell comprising a light-accessible flow channel for transporting particles in a flow stream;
a linear fiber array integrated with the flow cell and comprising a plurality of non-circular core optical fibers each configured to project excitation wavelength light onto a corresponding focal spot within the flow cell; and
a plurality of fiber optic light conveyor couplers for operably attaching the plurality of light sources to the linear fiber array.

15. A method of analyzing a sample, the method comprising:
(a) introducing a particulate sample into a flow cytometer comprising:
a plurality of light sources; and
an integrated optofluidic interrogation module comprising:
a flow cell comprising a light-accessible flow channel for transporting particles in a flow stream;
a linear fiber array integrated with the flow cell and comprising a plurality of non-circular core optical fibers each configured to project excitation wavelength light onto a corresponding focal spot within the flow cell; and
a plurality of fiber optic light conveyor couplers for operably attaching the plurality of light sources to the linear fiber array; and
(b) flow cytometrically analyzing the particulate sample.
